# EUROPEAN PATENT APPLICATION

(11) **EP 2 040 480 A1**
(43) Date of publication of application: **25.03.2009**
(21) Application number: 07768234.2
(22) Date of filing: 05.07.2007
(51) Int. Cl.: H04Q 7/38, H04J 1/00, H04J 11/00, H04Q 7/28

(54) **WIRELESS COMMUNICATION SYSTEM, MOBILE STATION APPARATUS AND RANDOM ACCESS METHOD**

(30) Priority: 06.07.2006 JP 2006186802
(71) Applicant: Sharp Kabushiki Kaisha, Osaka-shi, Osaka 545-8522 (JP)
(72) Inventor: NAKASHIMA, Daiichiro, Chiba-ken (JP); YAMADA, Shohei, Chiba-ken (JP)
(74) Representative: Müller - Hoffmann & Partner
(86) International application number: PCT/JP2007/063485
(87) International publication number: WO 2008/004629

(57) **Abstract**

A wireless communication system includes a base station device and a mobile station device that tries a random access to the base station device. The mobile station device determines an upper limit of a random backoff time representing an interval from when the random access fails to when another random access is retried based on a relationship between the mobile station device and the base station device.

## Description

### TECHNICAL FIELD

The present invention relates to a wireless communication system, a mobile station device, and a random access method, and particularly to a wireless communication system in which mobile station devices of different bandwidths are included and perform random accesses, to a mobile station device, and to a random access method.
Priority is claimed on Japanese Patent Application No. 2006-186802, filed July 6, 2006, the content of which is incorporated herein by reference.

### BACKGROUND ART

In 3GPP (3rd Generation Partnership Project), W-CDMA (Wideband-Code Division Multiplexing Access) has been standardized as a third-generation cellular-mobile-communication system, and services thereof have progressively been provided. Additionally, HSDPA (High Speed Downlink Packet Access) capable of higher-speed communication has also been standardized, and services thereof are about to be provided.

On the other hand, EUTRA (Evolved Universal Terrestrial Radio Access) has been under consideration in 3GPP. An OFDMA (Orthogonal Frequency Division Multiplexing Access) system is suggested as a downlink communication system in EUTRA. AMCS (Adaptive Modulation and Coding Scheme) based on link adaptation, such as channel encoding, is applied to the OFDMA system as an EUTRA technology. AMCS is a method in which wireless transmission parameters, such as an error correction scheme, an error correction encoding rate, the number of data-modulation level, an SF (Spreading Factor) on time and frequency axes, and the multi-code multiplexing number, are switched based on a channel condition of each mobile station device to efficiently perform high-speed packet-data transmission. As to data modulation, QPSK (Quadrature Phase Shift Keying) is switched to multilevel modulation of higher modulation efficiency, such as 8-PSK or 16-QAM (Quadrature Amplitude Modulation), as a channel condition becomes better. Thereby, the maximum throughput of a mobile communication system can be increased.

Various systems, such as a multi-carrier or single-carrier communication system, have been suggested as EUTRA uplink. VSCRF (Variable Spreading and Chip Repetition Factors)-CDMA and IFDMA (Interleaved Frequency Division Multiple Access) which have better PAPR (Peak to Average Power Ratio) characteristics than multi-carrier communication systems such as OFDM, or single-carrier communication systems such as DFT (Discrete Fourier Transform)-Spread OFDM have been suggested as effective uplink wireless communication systems. Additionally, an application of time-frequency scheduling in which communication channels are allocated to mobile station devices based on channel conditions in uplink-and-downlink time-frequency domains has been suggested.

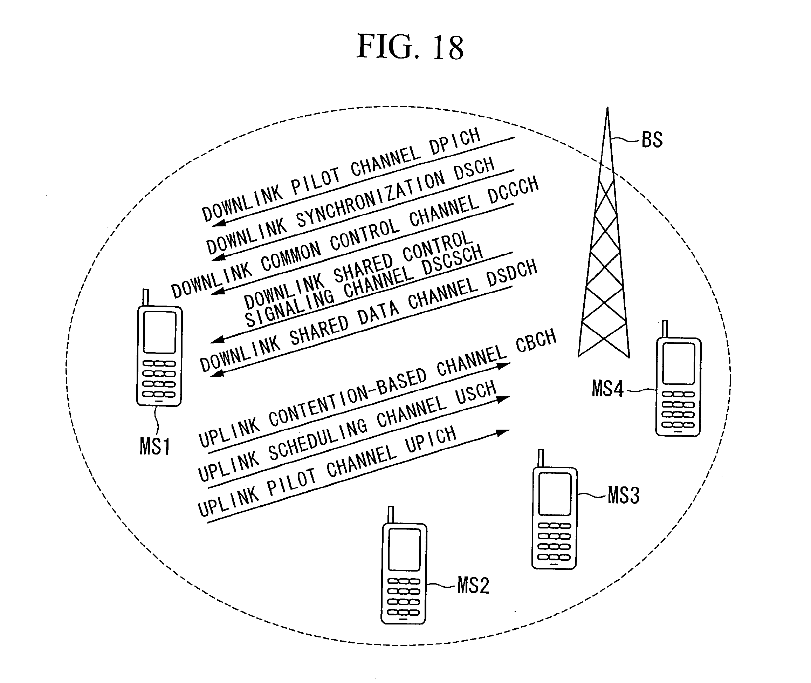

FIG. 18 shows the configuration of uplink and downlink channels based on the suggestions on EUTRA by 3GPP.
EUTRA downlink includes DPICH (Downlink Pilot Channel), DSCH (Downlink Synchronization Channel), DCCCH (Downlink Common Control Channel), DSCSCH (Downlink Shared Control Signaling Channel), and DSDCH (Downlink Shared Data Channel) (see Non-patent Document 1).

EUTRA uplink includes UPICH (Uplink Pilot Channel), CBCH (Contention-based Channel), and USCH (Uplink Scheduling Channel) (see Non-patent Document 2).

In the EUTRA downlink, DPICH includes DCPICH (Downlink Common Pilot Channel) and DDPICH (Downlink Dedicated Pilot Channel). DCPICH corresponds to CPICH (Common Pilot Channel) in the W-CDMA system and is used for demodulation of a downlink data channel, downlink channel estimation for the downlink AMCS and downlink time-frequency scheduling, a cell search, a channel loss measurement for uplink transmission-power control, and a measurement of a channel quality indicator of another cell to be used for handover. DDPICH is transmitted from an antenna having channel characteristics different from those of a cell-shared antenna, such as an adaptive array antenna, to each mobile station device. Alternatively, DDPICH is used for reinforcement of DCPICH for a mobile station device of low channel quality according to need.

DSCH corresponds to SCH (Synchronization Channel) in the W-CDMA system, and is used for a cell search performed by a mobile station device, a carrier frequency offset of OFDM signals, and timing synchronization of frames, timeslot TTI (Transmission Time Interval), and OFDM symbols. DSCH includes two types of synchronization channels of P-SCH (Primary-SCH) and S-SCH (Secondary-SCH) in some cases.

DCCCH includes common control information, such as broadcast information corresponding to P-CCPCH (Primary-Common Control Physical Channel), S-CCPCH (Secondary-Common Control Physical Channel), and PICH (Paging Indicator Channel) of the W-CDMA system, PI (Paging Indicator) information, paging information, and downlink access information.

DSCSCH corresponds to the control-information channel of HS-PDSCH (High Speed-Physical Downlink Shared Channel) of the HSDPA system. DSCSCH is shared by multiple mobile station devices and used for each mobile station device to transmit information required for demodulation of HS-DSCH (High Speed-Downlink Shared Channel) (such as a modulation scheme and a spreading code), and information required for error correction decoding and HARQ (Hybrid Automatic Repeat reQuest), information concerning scheduling of radio resources (frequency and time) (such as a user ID and a radio resource position).
DSDCH corresponds to the packet data channel of HS-PDSCH of the HSDPA system and is used for transmission of packet data from an upper layer to a mobile station device.

Uplink CBCH includes RACH (Random Access Channel), FACH (Fast Access Channel), uplink RCH (Request Channel), and uplink SCH (Synchronization Channel). The uplink CBCH corresponds to RACH (Random Access Channel) of the W-CDMA system. Although the same name of RACH is used for both EUTRA and W-CDMA systems, RACH of EUTRA mainly indicates a channel to be used for initial wireless connection or wireless reconnection during communication which is performed by a mobile station device (hereinafter, RACH indicates the random access channel of EUTRA). In the description, transmission of each channel of CBCH is collectively called a "random access".

USCH includes USCCH (Uplink Shared Control Channel) and USDCH (Uplink Shared Data Channel). USCH corresponds to uplink DPDCH (Dedicated Physical Data Channel) of the W-CDMA system and uplink HS-DPCCH (Dedicated Physical Control Channel for HS-DSCH) of the HSDPA system. USCH is shared by each mobile station device and used for each mobile station device to transmit packet data, a downlink CQI (Channel Quality Indicator), feedback information, such as HARQ (Hybrid Automatic Repeat reQuest), uplink channel-control information, and the like.

UPICH is used for demodulation of an uplink data channel, and uplink channel estimation for the uplink AMCS and time-frequency scheduling.

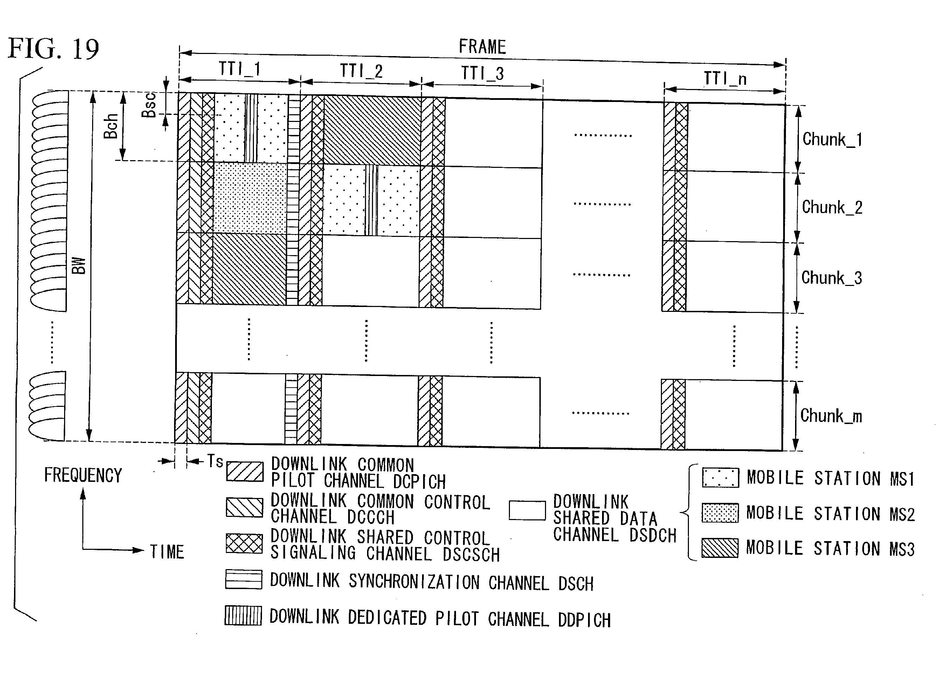

FIG. 19 shows the example structure of a downlink frame based on the suggestions on EUTRA by 3GPP.
A downlink frame is two-dimensionally defined by chunks (Chunk_1 to Chunk_m) which are bundles of multiple subcarriers on a frequency axis and timeslots (TTI_1 to TTI_n) on a time axis. Each of the chunks includes a bundle of multiple subcarriers. When it is assumed with respect to the frequency axis that the entire downlink system-bandwidth BW managed by a base station device is 20 MHz, a chunk bandwidth Bch is 1.25 MHz, and a subcarrier bandwidth Bsc is 12.5 kHz, 16 chunks each including 100 subcarriers, i.e., 1600 sub carriers in total are included in a downlink frame. When it is assumed with respect to the time axis that one frame has 10 ms and one TTI has 0.5 ms, 20 TTIs are included in one frame. In other words, one frame includes 16 chunks and 20 TTIs, and one TTI includes multiple OFDM symbols. When a length Ts of an OFDM symbol is 0.05 ms, one TTI includes 10 OFDM symbols. Accordingly, the minimum radio resource unit which can be used by a mobile station device is defined by one chunk (100 subcarriers) and one TTI (0.5 ms). Additionally, one radio resource corresponding to one chunk can be further divided, and the divided frequency bandwidth (resource bandwidth) can be used as a unit of AMCS or frequency scheduling. The resource defined by this unit is called a "resource block".

As shown in FIG. 19, DCPICH is mapped to the head of each timeslot TTI. If necessary, DDPICH is mapped to an adequate position in a timeslot TTI (for example, the center of a timeslot TTI) according to a usage condition of an antenna of a base station device or a channel condition of a mobile station device.

DCCCH and DSCH are mapped to the head timeslot TTI of a frame (for example, DCCCH is mapped to a position after the position of DCPICH, and DSCH is mapped to the last of a timeslot TTI). As a result, a mobile station device in an idle mode can perform a cell search and timing synchronization, and receive common control information, such as broadcast information and paging information, only if the head timeslot TTI of a frame or a few OFDM symbols included in the head timeslot TTI of a frame is received. The mobile station device in the idle mode can perform IR (Intermittent Reception).

Similarly to DCPICH, DSCSCH is mapped to an anterior position of each timeslot TTI (for example, DSCSCH is mapped to a position after the position of DCCCH which is after the position of DCPICH in the head timeslot TTI of a frame, or to a position after the position of DCPICH in another timeslot TTI). The mobile station device can perform IR, i.e., receive only DSCSCH when no packet data addressed to the mobile station device is included in each timeslot TTI during packet communication.

DSDCH is divided and allocated to each mobile station device in units of chunks based on a channel condition of each mobile station device, and used for transmission of packet data addressed to each mobile station device. In the timeslot TTI_1 shown in FIG. 19 as an example, a mobile station device MS1 is allocated a channel at Chunk_1, a mobile station device MS2 is allocated a channel at Chunk_2, and a mobile station device MS3 is allocated a channel at Chunk_3.

As shown in FIG. 19, a frequency scheduling method has been suggested in which a channel corresponding to one chunk is allocated to a mobile station device at the timeslots TTI_1 and TTI_2, and multiple channels corresponding to multiple chunks are allocated to a mobile station device in a good channel condition so that the throughput of the entire system is enhanced using the multi-user diversity effect. Another frequency scheduling method has also been suggested in which a channel defined by multiple chunks and sub-TTIs is allocated to a mobile station device, and a wide frequency bandwidth over multiple chunks is allocated to a mobile station device in a bad radio channel condition caused by being located at a cell boundary or moving at a high speed, so that the reception characteristics are improved using the frequency diversity effect.

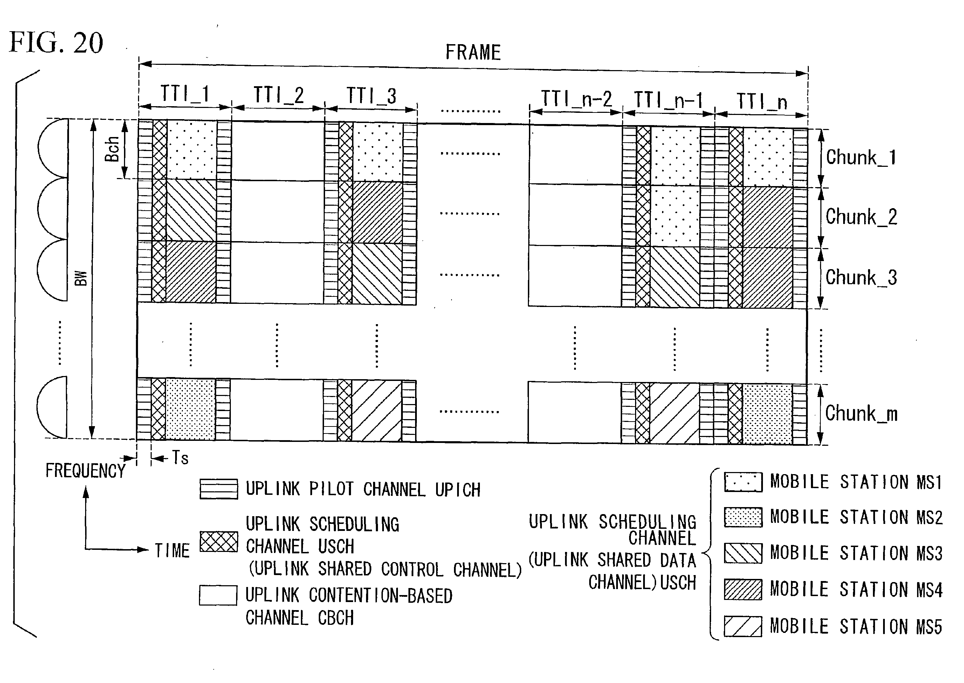

FIG. 20 shows the example structure of an uplink frame based on the suggestions on EUTRA by 3 GPP.
An uplink frame is two-dimensionally defined by chunks (Chunk_1 to Chunk_m) which are bundles of multiple subcarriers on a frequency axis and timeslots (TTI_1 to TTI_n) on a time axis. When it is assumed with respect to the frequency axis that the entire uplink system-bandwidth BW managed by a base station device is 20 MHz, a chunk bandwidth Bch is 1.25 MHz, 16 chunks are included on the uplink frequency axis. When it is assumed with respect to the time axis that one frame has 10 ms and one TTI has 0.5 ms, 20 TTIs are included. In other words, one frame includes 16 chunks and 20 TTIs, and one TTI includes multiple symbols. In this case, the minimum radio resource unit which can be used by a mobile station device is defined by one chunk (1.25 MHz) and one TTI (0.5 ms). Additionally, one radio resource corresponding to one chunk can be further divided, and the divided frequency bandwidth (resource bandwidth) can be used as a unit of AMCS or frequency scheduling. The resource defined by this unit is called a "resource block".

As shown in FIG. 20, UPICH is mapped to the head and the end of each TTI including USCH. FIG. 20 shows an example allocation of UPICH, and therefore UPICH can be mapped to another position. A base station device performs radio channel estimation or detection of reception timing misalignment between each mobile station device and the base station device based on UPICH transmitted from each mobile station device. Each mobile station device can simultaneously transmit UPICH using the distributed FDMA (comb-teeth-shaped spectrum), the localized FDMA (localized spectrum), or CDMA.

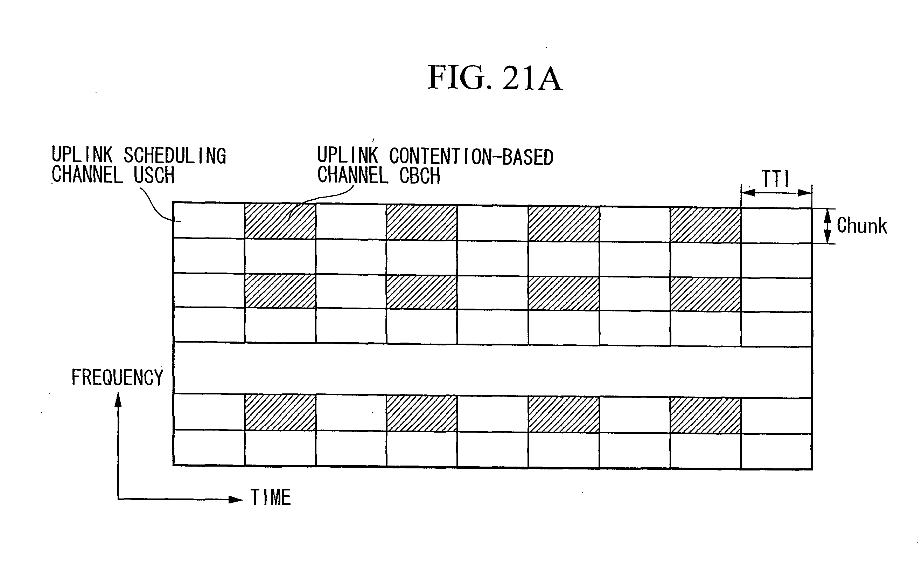

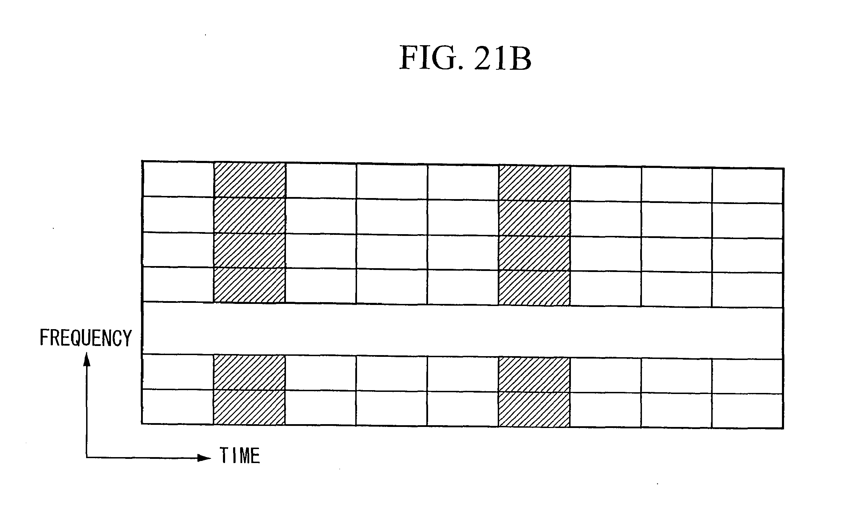

CBCH and USCH are mapped as shown in FIGS. 21A and 21B by a multiplexing, such as TDM (Time Division Multiplexing in the case of FIG. 21B) or a TDM-FDM hybrid method (Time-and-Frequency Division Multiplexing in the case of FIG. 21).

The base station device allocates USCH to each mobile station device in units of chunks based on a channel condition of each mobile station device. Each mobile station device that is allocated the channel transmits packet data to the base station device. In TTI_1 shown in FIG. 20 as an example, the mobile station device MS 1 is allocated a channel at Chunk_1, the mobile station device MS3 is allocated a channel at Chunk_2, and a mobile station device MS4 is allocated a channel at Hunk_3, and the mobile station device MS2 is allocated a channel at Chunk_m.

As scheduling methods of allocating USCH to each mobile station device in units of chunks based on a channel condition of each mobile station device, time-domain channel-dependent scheduling using a pre-assigned frequency bandwidth, frequency-and-time-domain channel-dependent scheduling, and a hybrid method of the above two methods have been suggested (see Non-patent Document 3). In the time-domain channel-dependent scheduling, chunk bands in the frequency domain are preliminarily determined, and scheduling only in the time domain is performed for each mobile station device based on a radio channel condition thereof. In frequency-and-time-domain channel-dependent scheduling, scheduling both in the frequency and the time domains is performed based on a radio channel condition thereof.

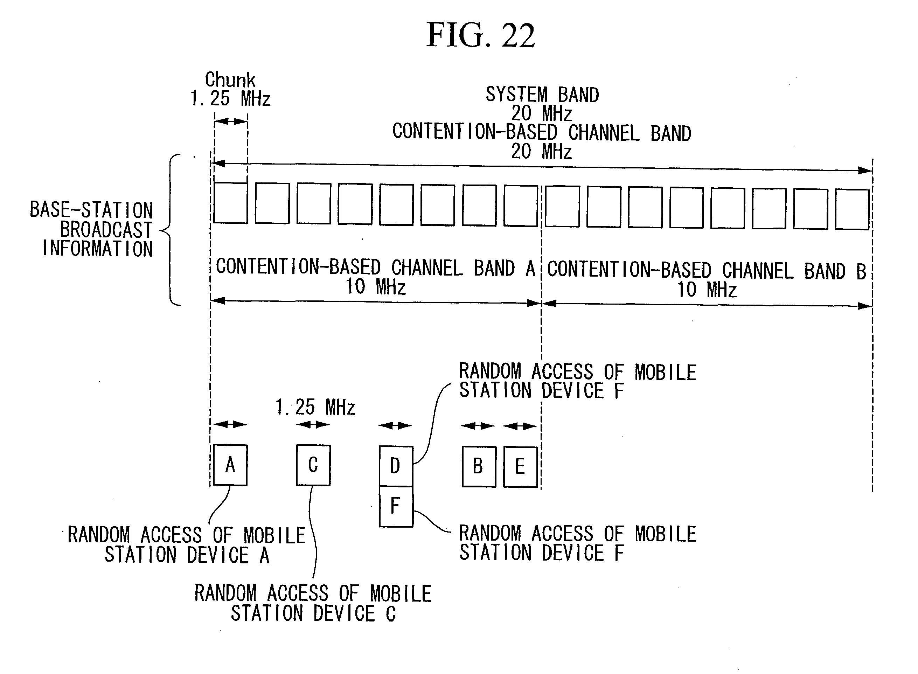

Differently from the uplink CBCH multiplexing methods, it has been suggested as shown in FIG. 22 that a base station device indicates an uplink CBCH band to mobile station devices under management as broadcast information so that each mobile station device performs a random access using a part of chunks included in the indicated uplink CBCH band (see Non-patent Document 4). In the case of FIG. 22, the base station device orders the mobile station devices A, B, C, D, E, and F to use an uplink CBCH frequency band A as the uplink CBCH. Each of the mobile station devices randomly selects a chunk which is included in the uplink CBCH frequency band A and to be used for a random access. A case where the frequency bandwidth to be used by each mobile station device for the random access is 1.25 MHz is shown. Since each mobile station device randomly selects a frequency bandwidth, multiple mobile station devices select the same chunk in some cases. In the case of FIG. 22, a mobile station device A selects the leftmost chunk included in the CBCH frequency band A. A mobile station device B selects the second chunk counted from the rightmost chunk. A mobile station device C selects the third chunk counted from the leftmost chunk. A mobile station device E selects the rightmost chunk. Mobile station devices D and F both select the fourth chunk counted from the rightmost chunk.

The uplink CBCH is divided in units of chunks. When user data or control data that has not been scheduled by the base station device is present, each mobile station device transmits data over the uplink CBCH using the distributed FDMA, the localized FDMA, or CDMA.

Hereinafter, RACH that is the main target of the preset invention is explained.
One of the primary objects of RACH to be used for establishment of an initial wireless connection or wireless reconnection during communication is to synchronize reception timing between a base station device and each mobile station device at the edge of an antenna of the base station device. A method for each mobile station device to transmit only a preamble for measurement of reception timing misalignment between each mobile station device and the base station device, a method for each mobile station device to transmit the preamble and a payload including information required for a wireless connection control, and the like have been suggested (see Non-patent Documents 4 and 5). Information for identifying a mobile station device is also included in RACH in any method.

When a mobile station device tries an RACH random access to establish initial wireless connection, the mobile station device cannot recognize which chunk has the most free resources that have not been utilized by any mobile station device or which chunk is subjected to the least interference among mobile station devices. Thereby, even if the mobile station device selects a chunk by which the mobile station device tries an RACH random access, a collision of accesses from mobile station devices caused by a concentration of random accesses occurs in some cases, requiring an amount of time up to a successful RACH random access. A successful RACH random access indicates that RACH transmitted from the mobile station device is surely detected by the base station device. When a collision of RACH random accesses occurs, an RACH random access is usually retried after some time interval. Providing a time interval before an RACH random access is retried is called "random backoff". The time interval is called a "random backoff time". An upper limit is set under which the time that the mobile station device terminates a transmission or the time that the mobile station device resumes a transmission is randomly set to prevent the mobile station devices causing the collision from continuously retransmitting RACHs which leads to continuous collisions.

Additionally, requirements for EUTRA have been suggested (see Non-patent Document 6). Spectrum flexibility is required for integration and coexistence of the existing 2G and 3G services. Support for spectrum allocations of different size (for example, 1.25 MHz, 2.5 MHz, 5 MHz, 10 MHz, and 20 MHz) is required. Support for mobile station devices of mobile station classes which perform transmission and reception of different frequency bandwidths (for example, 1.25 MHz, 2.5 MHz, 5 MHz, 10 MHz, and 20 MHz) is required.
Non-patent Document 1: R1-050707, "Physical Channel and Multiplexing in Evolved UTRA Downlink", 3GPP TSG-RAN WG1 Meeting #42, London, UK, August 29-September 2, 2005
Non-patent Document 2: R1-050850, "Physical Channel and Multiplexing in Evolved UTRA Uplink", 3GPP TSG RAN WG1 Meeting #42, London, UK, August 29-September 2, 2005
Non-patent Document 3: R1-050701, "Channel-Dependent Scheduling Method for Single-Carrier FDMA Radio Access in Evolved UTRA Uplink", 3GPP TSG RAN WG1 Meeting #42, London, UK, August 29-September 2, 2005
Non-patent Document 4: R1-051391, "Random Access Transmission for Scalable Multiple Bandwidth in Evolved UTRA Uplink", 3 GPP TSG RAN WG1 Meeting #43, Seoul, Korea, November 7-11, 2005
Non-patent Document 5: R1-051445, "E-UTRA Random Access", 3GPP TSG RAN WG1 Meeting #43, Seoul, Korea, November 7-11, 2005
Non-patent Document 6: 3GPP TR (Technical Report) 25.913, V7.2.0 (2005-12), Requirements for Evolved UTRA (E-UTRA) and Evolved UTRAN (E-UTRAN)

### DISCLOSURE OF THE INVENTION

### Problems to be Solved by the Invention

A random access of a mobile station device requiring relatively fast establishment of a wireless connection in the system based on the suggestions on EUTRA collides with a random access from another mobile station device, and retransmission is repeated, degrading a response time from the first random access to the successful random access.

### Means for Solving the Problems

A wireless communication system according to the present invention includes a base station device and a mobile station device that tries a random access to the base station device. The mobile station device determines an upper limit of a random backoff time representing an interval from when the random access fails to when another random access is retried based on a relationship between the mobile station device and the base station device.

Accordingly, the mobile station device requiring fast establishment of a wireless connection sets the upper limit to be smaller. Thereby, the random backoff time is shortened, and the mobile station device requiring fast establishment of a wireless connection can perform a random access of an excellent response time.

A wireless communication system of the present invention includes a base station device and a mobile station device that tries a random access to the base station device. The mobile station device sets a random backoff time representing an interval from when the random access fails to when another random access is retried to a value in a range between an upper limit and a lower limit which are determined based on a relationship between the mobile station device and the base station device, and selects a frequency band to be used for retrying the other random access from available frequency bands determined based on the relationship.

Accordingly, in the wireless communication system of the present invention, the mobile station device requiring fast establishment of a wireless connection sets the upper limit to be smaller, and widens the frequency band to be used for retrying the other random access when the difference between the upper limit and the lower limit is small. Thereby, the random backoff time is shortened, a probability of a collision upon the retransmission is averaged. Therefore, the mobile station device requiring fast establishment of a wireless connection can perform a random access of an excellent response time.

In the wireless communication system of the present invention, a difference between the upper limit and the lower limit is determined based on a total bandwidth of the available frequency bands.

Accordingly, in the wireless communication system of the present invention, the mobile station device sets the difference between the upper limit and the lower limit to be larger if a total bandwidth of the available frequency bands is small, and sets the difference to be smaller if the total bandwidth of the available frequency bands is large. Thereby, the random backoff time is shortened, a probability of a collision upon the retransmission is averaged. Therefore, the mobile station device requiring fast establishment of a wireless connection can perform a random access of an excellent response time.

In the wireless communication system of the present invention, the relationship is a communication state between the mobile station device and the base station device.

Accordingly, in the wireless communication system of the present invention, the mobile station device requiring fast establishment of a wireless connection can perform a random access of an excellent response time.

In the wireless communication system of the present invention, the communication state includes at least a first communication state in which neither a physical layer nor a logical layer is connected, and a second communication state in which only the logical layer is connected.

In the wireless communication system of the present invention, the upper limit is smaller in the first communication state than that in the second communication state.

Accordingly, in the wireless communication system of the present invention, the mobile station device requiring fast establishment of a wireless connection can perform a random access of an excellent response time.

In the wireless communication system of the present invention, the relationship is a service type of communication between the mobile station device and the base station device.

Accordingly, in the wireless communication system of the present invention, the mobile station device requiring fast establishment of a wireless connection can perform a random access of an excellent response time.

In the wireless communication system of the present invention, the upper limit is determined based on a quality of service required for the service type of communication.

In the wireless communication system of the present invention, the upper limit is smaller when the quality of service is high than when the quality of service is low.

Accordingly, in the wireless communication system of the present invention, the mobile station device requiring fast establishment of a wireless connection can perform a random access of an excellent response time.

A mobile station device according to the present invention tries a random access to a base station device. The mobile station device determines an upper limit of a random backoff time from when the random access fails to when another random access is retried based on a relationship between the mobile station device and the base station device.

A random access method according to the present invention is a random access method for a wireless communication system including a base station device and a mobile station device that tries a random access to the base station device. The random access method includes: a first step of the mobile station device selecting a random backoff time smaller than a value determined based on a relationship between the mobile station device and the base station device when the random access fails; and a second step of the mobile station device retrying another random access after the random backoff time has elapsed.

### Effects of the Invention

In the wireless communication system of the present invention, an upper limit of a random backoff time is set to a small value for a mobile station device requiring fast establishment of a wireless communication connection. As a result, the random backoff time is shortened, resulting in a merit in that the wireless communication device requiring fast establishment of a wireless communication connection can perform a random access of an excellent response time.

### BRIEF DESCRIPTION OF THE DRAWINGS

FIG. 1 is a schematic block diagram showing the configuration of a wireless communication system of the first to fourth embodiments.
FIG 2 shows the example structure of an uplink frame common of the first to fourth embodiments.
FIG. 3A shows an example allocation of USCH and CBCH to an uplink frame of the first to fourth embodiments.
FIG. 3B shows an example allocation of USCH and CBCH to an uplink frame of the first to fourth embodiments.
FIG. 4 is a schematic diagram showing the configuration of mobile station devices MS 1 to MS4 of the first to fourth embodiments.
FIG. 5 is a schematic diagram showing the configuration of a modulator 103 of the first to fourth embodiments.
FIG. 6A is a schematic diagram showing an example operation of the modulator 103 upon transmission at Chunk_j in the first to fourth embodiments.
FIG. 6B is a spectrum diagram showing outputs of an IFFT unit 320 upon transmission at Chunk_j in the first to fourth embodiments.
FIG. 7A is a schematic diagram showing an example operation of the modulator 103 upon transmission at Chunk_k in the first to fourth embodiments.
FIG. 7B is a spectrum diagram showing outputs of the IFFT unit 320 upon transmission at Chunk_k in the first to fourth embodiments.
FIG. 8A is a schematic diagram showing an example operation of the modulator 103 upon transmission at Chunk_j to k in the first to fourth embodiments.
FIG. 8B is a spectrum diagram showing outputs of the IFFT unit 320 upon transmission at Chunk_j to k in the first to fourth embodiments.
FIG 9 is a schematic block diagram showing the configuration of a base station device BS of the first to fourth embodiments.
FIG. 10 shows selection examples of chunks upon an RACH random access of the first to fourth embodiments.
FIG. 11 shows the maximum random backoff time concerning an RACH retransmission in idle and dormant modes of the first embodiment.
FIG. 12A shows an example of an RACH retransmission timing in the idle and dormant modes of the first embodiment.
FIG. 12B shows an example of an RACH retransmission timing in the idle and dormant modes of the first embodiment.
FIG. 12C shows an example of an RACH retransmission timing in the idle and dormant modes of the first embodiment.
FIG. 13 shows an example of the maximum random backoff time concerning an RACH retransmission in the idle and dormant modes of a second embodiment.
FIG. 14A shows an example of a chunk to be used for an RACH retransmission in the idle mode of the second embodiment.
FIG. 14B shows an example of a chunk to be used for an RACH retransmission in the idle mode of the second embodiment.
FIG. 15 shows an example of chunks and timeslots to be available choices of allocation upon a random retransmission when the mobile station devices MS 1 to MS4 whose mobile station classes are 1.25 MHz, 2.5 MHz, 5 MHz, and 10 MHz are in the idle and dormant modes, and a bandwidth of a chunk is 1.25 MHz in a third embodiment.
FIG 16 is a flowchart showing operations when the mobile station devices MS 1 to MS4 and the base station device BS perform RACH random accesses in the first to third embodiments.
FIG. 17 is a flowchart showing operations when the mobile station devices MS 1 to MS4 and the base station device BS perform FACH random accesses in the first to third embodiments.
FIG. 18 shows the example configuration of uplink and downlink channels based on suggestions on EUTRA by 3 GPP.
FIG. 19 shows the example structure of the downlink frame based on the suggestions on EUTRA by 3GPP.
FIG. 20 shows the example structure of the uplink frame based on the suggestions on EUTRA by 3GPP.
FIG. 21A shows an example of mapping CBCH and USCH to an uplink frame based on the suggestions on EUTRA by 3 GPP.
FIG. 21B shows an example of mapping CBCH and USCH to an uplink frame based on the suggestions on EUTRA by 3GPP.
FIG. 22 shows a selection example of chunks to be used for random accesses by mobile station devices A, B, C, D, E, and F.

### Descriptions of Reference Numerals

- BS: base station device
- MS1, MS2, MS3, and MS4: mobile station device
- 100: transmitter
- 101: channel encoder
- 102: data controller
- 103: modulator
- 104: USCH scheduler
- 105: CBCH scheduler
- 106: scheduler
- 107: transmission timing controller
- 110: receiver
- 111: OFDM demodulator
- 112: channel estimator
- 113: control-data extractor
- 114: channel decoder
- 120: radio controller
- 130: radio unit
- 200: transmitter
- 201: channel encoder
- 202: data controller
- 203: OFDM modulator
- 205: DL scheduler
- 206: UL scheduler
- 210: receiver
- 211: demodulator
- 212: channel estimator
- 213: control-data extractor
- 214: channel decoder
- 215: reception-timing misalignment detector
- 220: radio unit
- 300: AMC modulator
- 301: FFT unit for 1.25 MHz
- 302: FFT unit for 2.5 MHz
- 304: FFT unit for 10 MHz
- 310: subcarrier mapper
- 320: IFFT unit

### BEST MODE FOR CARRYING OUT THE INVENTION

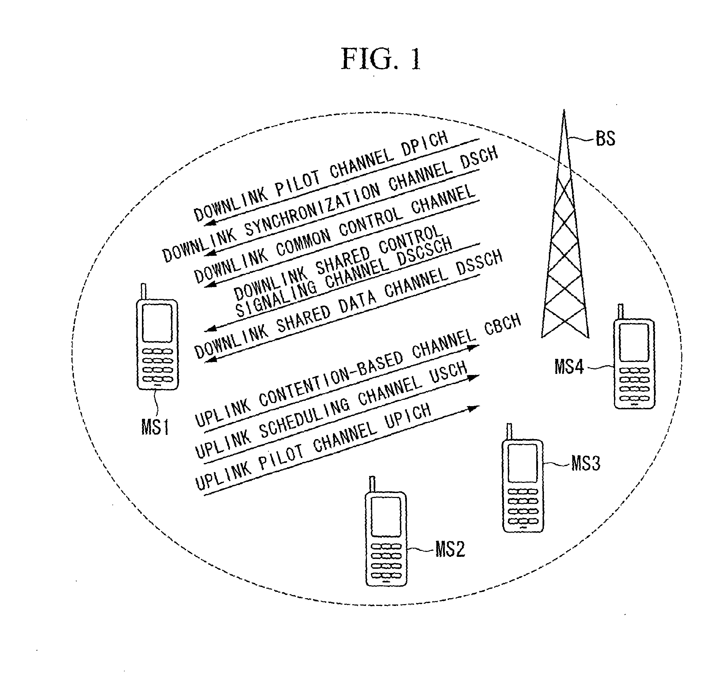

Hereinafter, first to third embodiments of the present invention are explained with reference to accompanying drawings. Firstly, contents common to these embodiments are explained. FIG. 1 is a schematic block diagram showing the configuration of a wireless communication system common to these embodiments. BS represents a base station. MS 1 to MS4 represent mobile station devices of different communication bandwidths. Similarly to EUTRA considered by 3GPP, a downlink of each embodiment includes DPICH, DSCH, DCCCH, DSCSCH, and DSDCH. Similarly to EUTRA considered by 3GPP, an uplink of each embodiment includes uplink CBCH, USCH, and UPICH.

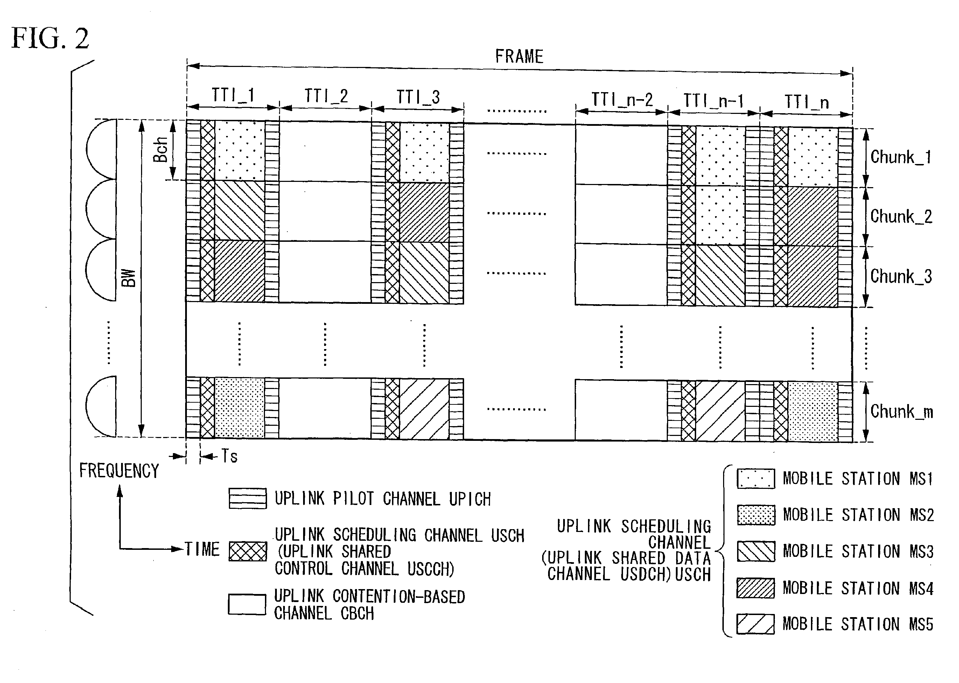

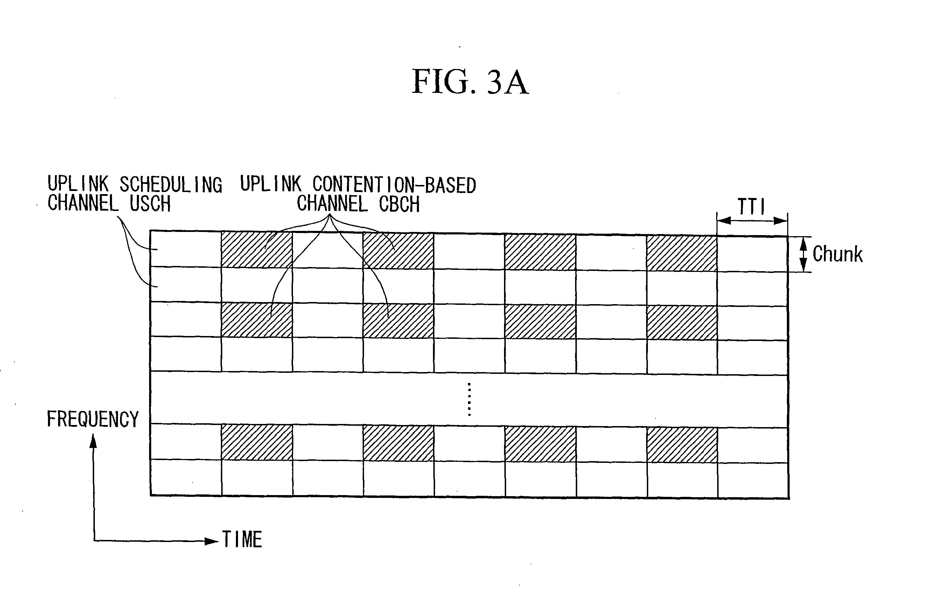

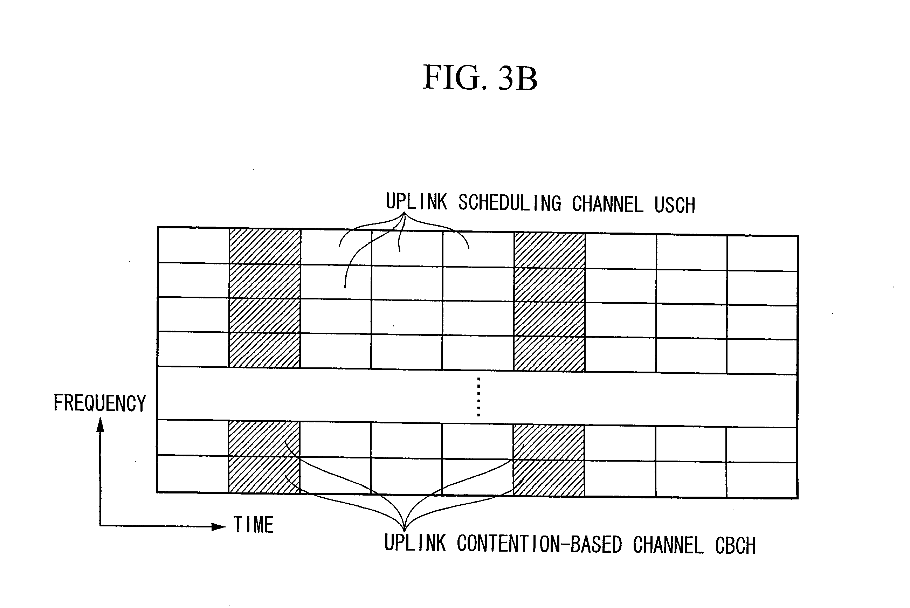

FIGS. 2 and 3 show the example structure of an uplink frame of each embodiment. Similarly to EUTRA considered by 3GPP, Time-and-Frequency division multiplexing is performed on CBCH and USCH.
As shown in FIG. 2, an uplink frame is two-dimensionally defined by chunks (Chunk_1 to Chunk_m) which are bundles of multiple subcarriers on a frequency axis and timeslots (TTI_1 to TTI_n) on a time axis. Additionally, one radio resource corresponding to one chunk can be further divided, and the divided frequency bandwidth (resource bandwidth) can be used as a unit of AMCS or frequency scheduling. The resource defined by this unit is called a "resource block".

As shown in FIG. 2, UPICH is mapped to the head and the end of each TTI including USCH. FIG. 2 shows an example allocation of UPICH, and therefore UPICH can be mapped to another position. The base station device BS performs radio channel estimation or detection of reception timing misalignment between the mobile station devices MS1 to MS4 and the base station device BS based on UPICH transmitted from each of the mobile station devices MS1 to MS4. Each of the mobile station devices MS1 to MS4 can simultaneously transmit UPICH using distributed FDMA (comb-teeth-shaped spectrum), localized FDMA (localized spectrum), or CDMA.

CBCH and USCH are arranged as shown in FIGS. 3A and 3B by Time-and-Frequency division multiplexing, such as TDM (Time Division Multiplexing in the case of FIG. 3B) or a TDM-FDM hybrid method (Time-and-Frequency division multiplexing in the case of FIG. 3A).

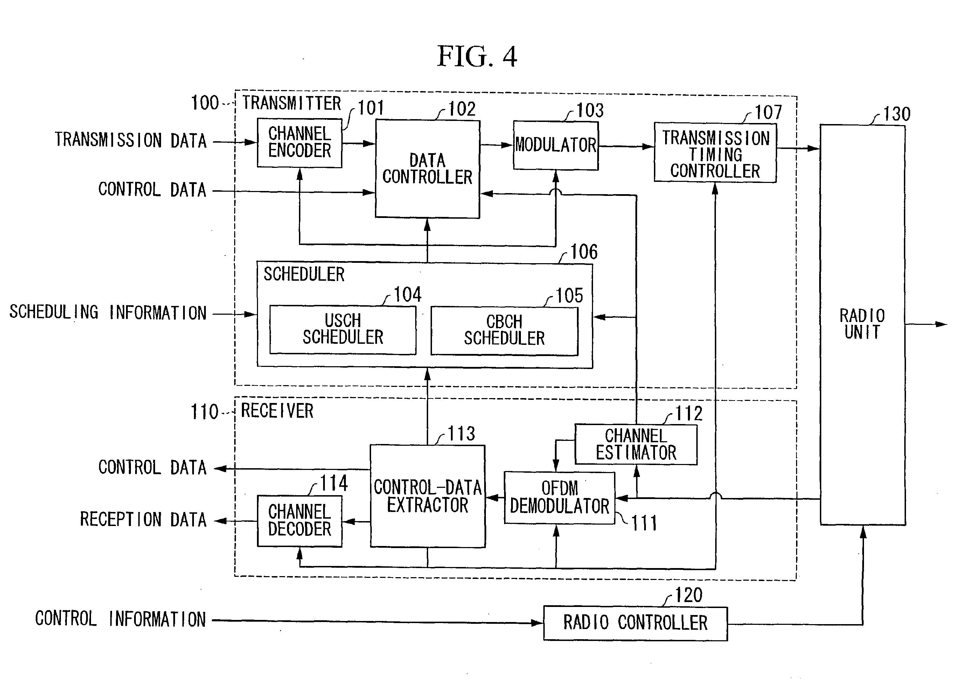

FIG 4 is a schematic block diagram showing the configuration of the mobile station devices MS1 to MS4.
Each of the mobile station devices MS1 to MS4 includes a transmitter 100, a receiver 110, a radio controller 120, and a radio unit 130. The transmitter 100 includes a channel encoder 101, a data controller 102, a modulator 103, a scheduler 106 including a USCH scheduler 104 and a CBCH scheduler 105, and a transmission timing controller 107. The receiver 110 includes an OFDM demodulator 111, a channel estimator 112, a control-data extractor 113, and a channel decoder 114. A radio controller 120 and a radio unit 130 are used for both transmission and reception.

Firstly, the configuration concerning transmission is explained.
The channel encoder 101 encodes input transmission data using an encoding rate included in AMC information input from the scheduler 106.

The data controller 102 allocates channels to a transmission frame so that downlink CQI information, input control data, and the transmission data encoded by the channel encoder 101 are transmitted over USCH and CBCH based on an instruction from the scheduler 106. In addition, the data controller 102 also allocates UPICH.

The modulator 103 modulates data using a modulation scheme included in the AMC information input from the scheduler 106 to generate modulated data. Additionally, the modulator 103 performs FFT (Fast Fourier Transform) on the modulated data, maps the modulated data FFT-transformed into subcarriers, and null data based on mapping information from the scheduler 106, performs IFFT (Inverse Fast Fourier Transform) on the mapped data, and thereby generates single-carrier modulation data. Although the explanation was given with the use of DFT-Spread OFDM as the uplink communication system for convenience of explanations, another single-carrier system, such as VSCRF-CDMA, or a multi-carrier system, such as OFDM, may be used.

The scheduler 106 determines a modulation scheme based on the AMC information indicated by the control-data extractor 113. Further, the scheduler 106 determines to which channel on a frame each data is to be allocated based on channel types specified by the scheduling information and the determined modulation scheme. The allocation of the channels to a frame is obtained as the scheduling information from the control-data extractor 113. The scheduler 106 includes the USCH scheduler 104 and the CBCH scheduler 105. The USCH scheduler 104 determines transmission data, control data, and CQI information which are transmitted over USCH. The CBCH scheduler 105 determines transmission data and control data which are transmitted over CBCH.

The CBCH scheduler 105 determines a random backoff time if a response to the data transmitted over CBCH is not received from the control-data extractor 113 even after a given time period has elapsed. Then, the CBCH scheduler 105 determines to which chunk the data is to be allocated after the random backoff time has elapsed. The detailed method of determining the random backoff time and the chunk is explained in each embodiment.

The transmission timing controller 107 outputs single-carrier modulation data to the radio unit 130 based on transmission timing information input from the control-data extractor 113.

The radio unit 130 has set an oscillation frequency to a local oscillator included in the radio unit 130 based on radio frequency information input from the radio controller 120. The radio unit 130 upconverts the input single-carrier modulation data into a radio frequency signal using an oscillation signal generated by the local oscillator, and transmits the radio frequency signal from a non-depicted antenna to the base station device BS.

Hereinafter, the configuration concerning reception is explained.
The radio unit 130 receives downlink data from the base station device BS through the non-depicted antenna, downconverts the received data into a baseband signal, and then outputs the baseband signal to the OFDM demodulator 111 and the channel estimator 112.

The channel estimator 112 estimates channel characteristics from the received data corresponding to DPICH, and then outputs a channel estimation value to the OFDM demodulator 111. To indicate a reception condition to the base station device BS, the channel estimator 112 generates CQI information based on the channel estimation value, and then outputs the CQI information to the data controller 102 and the scheduler 106.

The OFDM demodulator 111 performs channel compensation on the reception data based on the channel estimation value input from the channel estimator 112, and demodulates the reception data based on the AMC information input from the control-data extractor 113.

The control-data extractor 113 demultiplexes the reception data into information data and control data (DCCCH and DSCSCH). The control-data extractor 113 outputs AMC information included in the control data and corresponding to downlink information data to the OFDM demodulator 111 and the channel decoder 114, and uplink AMC information and scheduling information (concerning allocation of channels to a frame) to the scheduler 106. Further, the control-data extractor 113 outputs uplink transmission timing information included in the control data to the transmission-timing controller 107.

The channel decoder 114 decodes demodulation data from the AMC information included in the information data input by the control-data extractor 113, and outputs the decoded data as reception data to an upper layer. It is assumed that a given AMC is preliminarily set to the control data. Thereby, the OFDM demodulator 111 demodulates the control data using the given modulation scheme preliminarily set. The channel decoder 114 decodes the control data using a given encoding rate preliminarily set. Illustrations of a channel encoder and a channel decoder for control data are omitted in FIG. 4.
The radio controller 120 selects a center frequency of a frequency band to be used in downlink and uplink, and outputs radio frequency information to the radio unit 130.

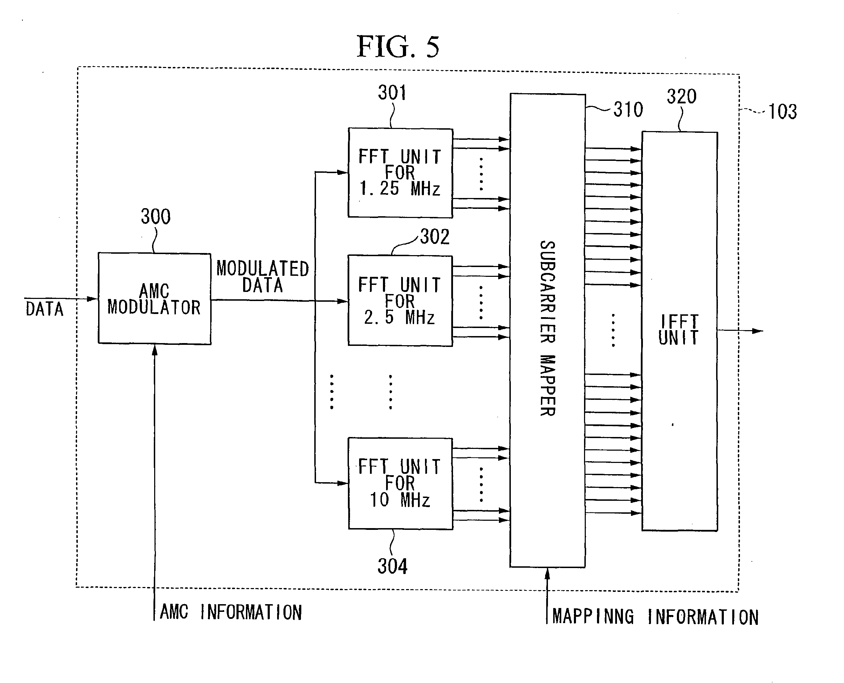

Hereinafter, the details of the demodulator 103 are explained. Processing of changing a transmission frequency band (chunk) without changing an oscillation frequency of the local oscillator included in the radio unit 130 is explained. In the embodiments, the modulator 103 performs modulation in DFT-Spread OFDM. FIG. 5 is a schematic block diagram showing the configuration of a processor that is included in the modulator 103 and generates DFT-Spread OFDM modulation signals. The modulator 103 includes an AMC modulator 300, FFT units for frequency bands to be used, such as an FFT unit 301 for 1.25 MHz, an FFT unit 302 for 2.5 MHz, ..., an FFT unit 304 for 10 MHz, a subcarrier mapper 310, and an IFFT unit 320.

The AMC modulator 300 modulates data input from the data controller 102 using a modulation scheme included in the AMC information input from the scheduler 106, and generates modulation data.
Each of the FFT unit 301 for 1.25 MHz, the FFT unit 302 for 2.5 MHz, ..., the FFT unit 304 for 10 MHz is selected according to a frequency band to be used for transmission of data, performs FFT on the modulation data generated by the AMC modulator 300, and outputs the modulation data converted into subcarriers (i.e., a coefficient of each frequency obtained as a conversion result) to the subcarrier mapper 310. When a frequency band to be used for transmission of data is 1.25 MHz corresponding to one chunk, for example, the FFT unit 301 for 1.25 MHz is selected to perform FFT on the modulation data. Similarly, when a frequency band to be used for transmission of data is 2.5 MHz corresponding to two chunks, the FFT unit 302 for 2.5 MHz is selected. When a frequency band to be used for transmission of data is 10 MHz corresponding to eight chunks, the FFT unit 304 for 10 MHz is selected.

The subcarrier mapper 310 maps the modulation data FFT-converted into subcarriers, and null data to subcarriers based on the mapping information input by the scheduler 106, and outputs the subcarriers to the IFFT unit 320. If a frequency bandwidth to be used (frequency bandwidth of the FFT unit) is smaller than that of IFFT unit 320, the modulation data is mapped to a frequency band (chunk) to be used for transmission at this stage.

The IFFT unit 320 performs IFFT on the modulation data and the null data that are mapped to subcarriers by the subcarrier mapper 310. The number of subcarriers to which inputs of the IFFT unit 320 can be mapped varies depending on each mobile station class. When a mobile station class is 10 MHz, for example, the inputs of the IFFT unit 320 are mapped to subcarriers belonging to a frequency bandwidth of 10 MHz. When a mobile station class is 5 MHz, the inputs are mapped to subcarriers belonging to a frequency bandwidth of 5 MHz, and therefore the number of subcarriers targeted for the mapping is half that of the case of 10 MHz.

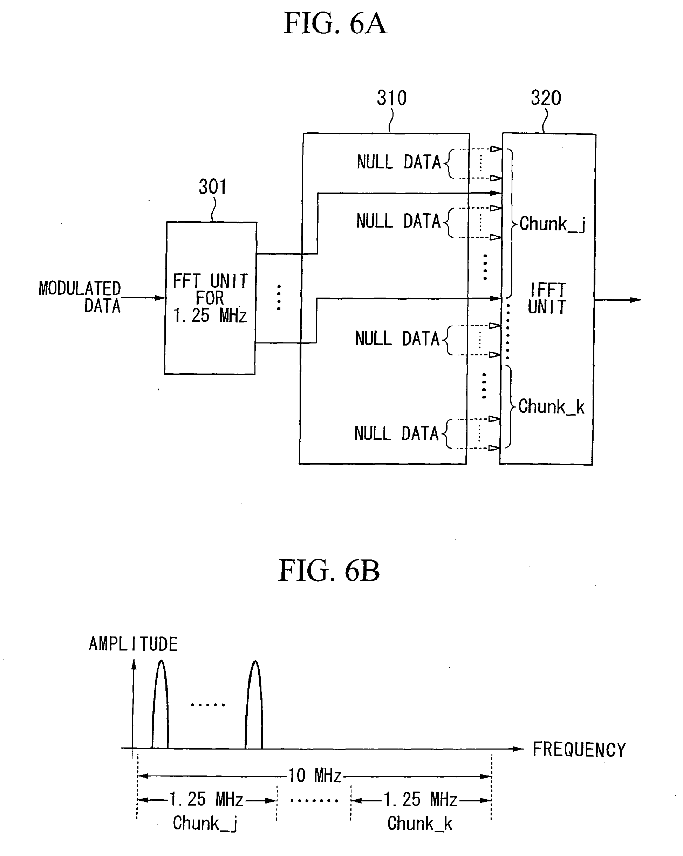

An operation for the modulator 103 to select one chunk to be used for transmission, such as a random access, is explained. FIG. 6A shows a mapping example when the scheduler 106 specifies the smallest frequency Chunk_j as a chunk to be used for transmission from frequency bands available to the IFFT unit 320 while the oscillation frequency of the local oscillator included in the radio unit 130 is set to a certain value. Since the number of chunks to be used for transmission is one, the FFT unit 301 for 1.25 MHz is selected. Then, the FFT unit 301 for 1.25 MHz performs FFT on the modulation data generated by the AMC modulator 300.

When the Chunk_j is specified as the mapping destination by the scheduler 106, the subcarrier mapper 310 maps the modulation data FFT-converted by the FFT unit 301 for 1.25 MHz to subcarriers belonging to Chunk_j at equal intervals, and outputs the sub carriers to the IFFT unit 320. In other words, the subcarrier mapper 310 maps the modulation data to subcarriers belonging to a chunk of the smallest frequency among the inputs of IFFT unit 320. Further, the subcarrier mapper 310 maps null data to subcarriers to which the FFT-converted modulation data is not mapped, and outputs the null data to the IFFT unit 320. The IFFT unit 320 performs IFFT on the inputs from the subcarrier mapper 310.

As a result, the outputs of the IFFT unit 320 become an equally-spaced discrete spectrum included in the frequency band of 1.25 MHz (Chunk_j) which is the smallest frequency in the frequency band of 10 MHz as shown in FIG. 6B.

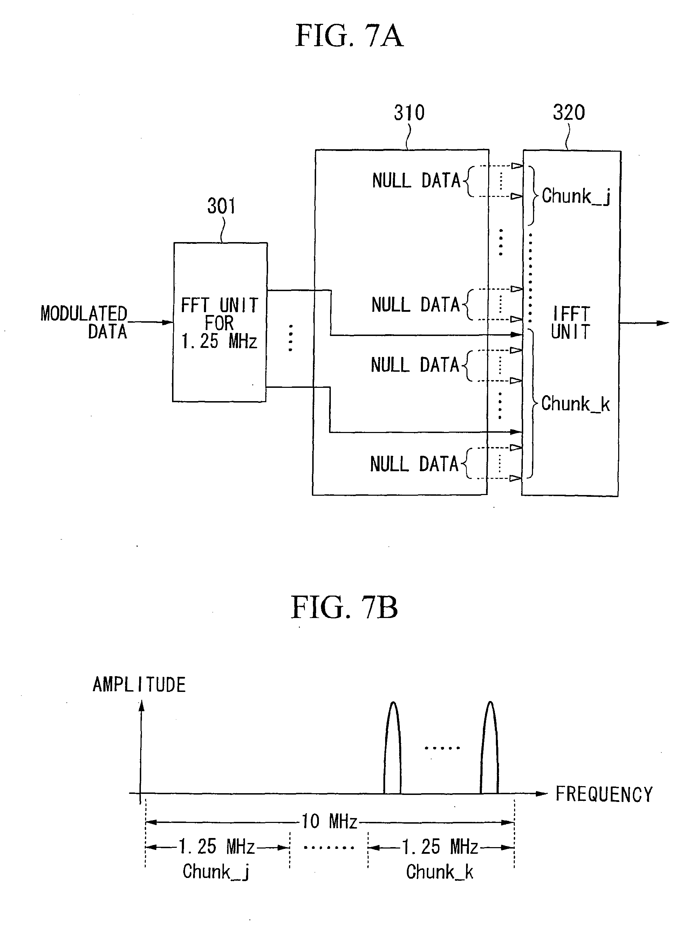

FIG. 7A shows an mapping example when the scheduler 106 specifies, as a chunk to be used for transmission, Chunk_k whose maximum frequency is separated from the minimum frequency of Chunk_j by 10 MHz after the transmission over Chunk_j is completed. Since the number of chunks to be used for transmission is one, the FFT unit 301 for 1.25 MHz is selected similarly to the case of Chunk_j. Then, the FFT unit 301 for 1.25 MHz performs FFT on the modulation data generated by the AMC modulator 300.

When Chunk_k is specified as the mapping destination by the scheduler 106, the subcarrier mapper 310 maps the modulation data FFT-converted by the FFT unit 301 for 1.25 MHz to subcarriers belonging to Chunk_k at equal intervals, and outputs the subcarriers to the IFFT unit 320. In other words, the subcarrier mapper 310 maps the modulation data to subcarriers belonging to a chunk of the largest frequency among the inputs of IFFT unit 320. Further, the subcarrier mapper 310 maps null data to subcarriers to which the FFT-converted modulation data is not mapped, and outputs the null data to the IFFT unit 320. The IFFT unit 320 performs IFFT on the inputs from the subcarrier mapper 310.

As a result, the outputs of the IFFT unit 320 become an equally-spaced discrete spectrum included in the frequency band of 1.25 MHz (Chunk_k) which is the largest frequency in the frequency band of 10 MHz as shown in FIG 7B.
As shown in FIG. 7A, the subcarrier mapper 310 maps the modulation data to a point group different from that shown in FIG. 6A. Thereby, the equally-spaced discrete spectrum occurs in the frequency band of 1.25 MHz which is located differently from the case of FIG. 6B in the frequency band of 10 MHz, as shown in FIG. 7B.

Thus, the subcarrier mapper 310 can change a chunk to be used for transmission to a different chunk by changing a mapping destination as long as inputs of the IFFT unit 320 are included in the frequency band to which subcarriers can be mapped, preventing a delay which occurs when an oscillation frequency of the local oscillator is changed.

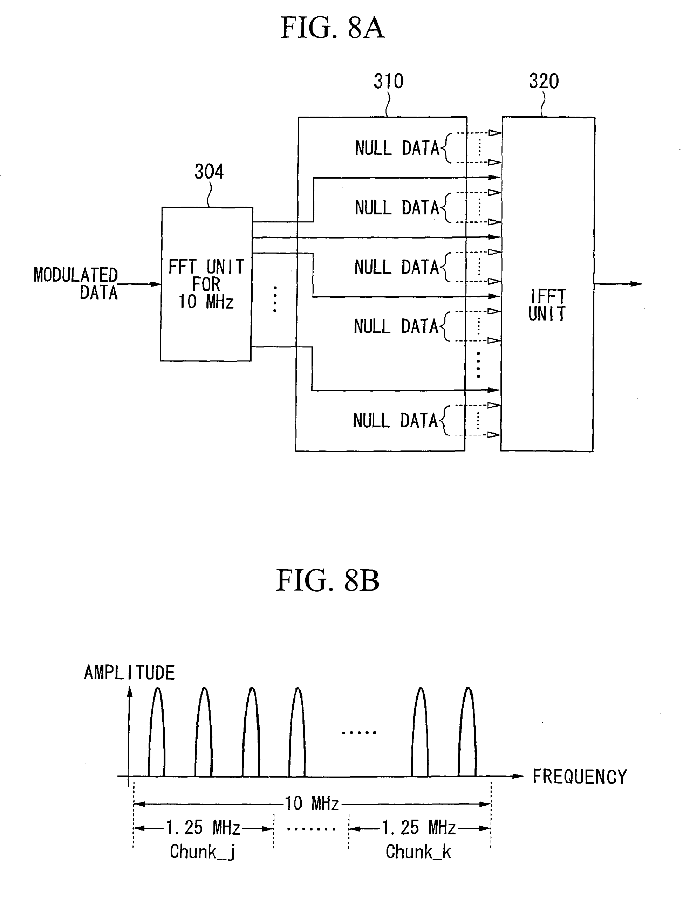

Hereinafter, an operation for the modulator 103 to perform transmission using multiple chunks is explained.
A case when a frequency band to be used by a mobile station device whose mobile station class is 10 MHz is 10 MHz is explained. FIG. 8A shows an example of mapping performed by the subcarrier mapper 310 when a frequency band to be used is 10 MHz. The FFT unit 304 for 10 MHz is selected, performs FFT on the modulation data, and outputs the converted data. The subcarrier mapper 310 maps the outputs of the FFT unit 304 for 10 MHz to IFFT points at equal intervals, and inserts null data thereamong. FIG 8B shows an example spectrum when a frequency band to be used is 10 MHz. As shown in FIG 8B, the output becomes an equally-spaced discrete spectrum.

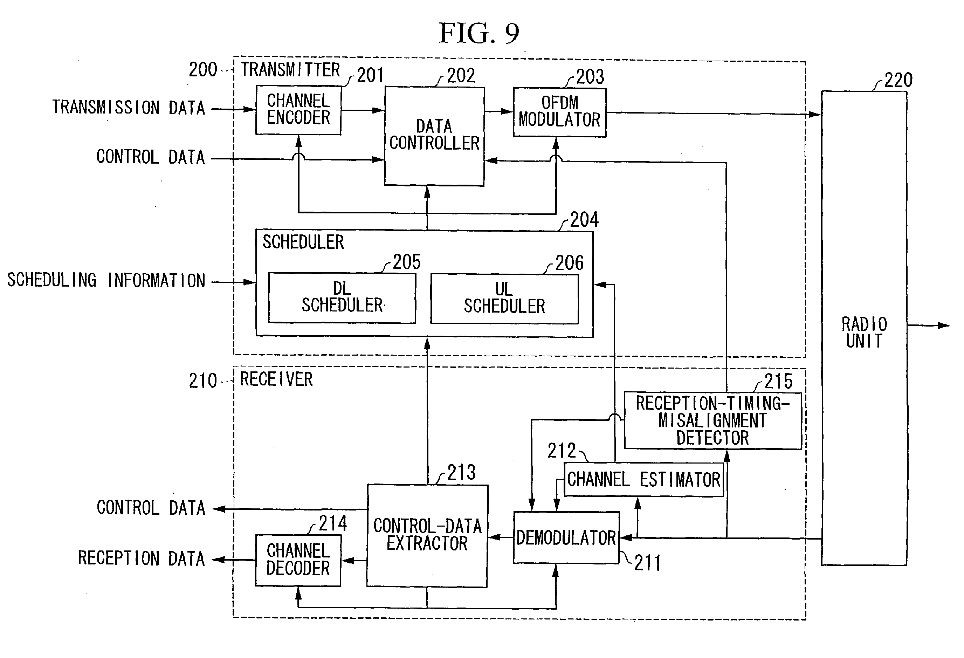

FIG. 9 is a schematic block diagram showing the configuration of the base station device BS.
The base station device BS includes a transmitter 200, a receiver 210, and a radio unit 220. The transmitter 200 includes a channel encoder 201, a data controller 202, an OFDM modulator 203, and a scheduler 204 including a DL scheduler 205 and a UL scheduler 206. The receiver 210 includes a demodulator 211, a channel estimator 212, a control-data extractor 213, a channel decoder 214, and a reception-timing-misalignment detector 215. A radio controller 220 is used for both transmission and reception.

Firstly, the configuration concerning transmission is explained.
The channel encoder 201 encodes input transmission data using an encoding rate included in the AMC information input from the scheduler 204.

The data controller 202 maps control data to DCCCH, DSCH, DPICH, and DSCSCH based on an instruction from the scheduler 204. Further, the data controller 202 maps information data for each of the mobile station devices MS1 to MS4 to DSDCH.

The OFDM modulator 203 performs OFDM-signal processing, such as data modulation, serial-to-parallel conversion on an input signal, multiplying of a spreading code and a scrambling code, IFFT, addition of GI (Guard Interval), filtering, and thereby generates OFDM signals. Information data of each subcarrier is modulated using a modulation scheme specified by the AMC information included in the information data concerning the mobile station devices MS 1 to MS4 which is input by the scheduler 204.

The radio unit 220 upconverts the data modulated by the OFDM modulator 203 into a radio frequency signal, and transmits the data to the mobile station devices MS 1 to MS4.

Hereinafter, the configuration concerning reception is explained.
The radio unit 220 downconverts uplink data from the mobile station devices MS 1 to MS4 into a baseband signal, and then outputs the baseband signal to the demodulator 211, the channel estimator 212, and the reception-timing-misalignment detector 215.

The channel estimator 212 estimates channel characteristics from UPICH and outputs a channel estimation value to the demodulator 211. Further, the channel estimator 212 outputs a result of the estimation to the scheduler 204 for uplink scheduling and calculation of AMC of information data.

The reception-timing-misalignment detector 215 detects timing misalignment of data from the mobile station devices MS1 to MS4 based on preambles of UPICH or RACH, and outputs information concerning the reception timing misalignment to the demodulator 211 and the data controller 202.

The demodulator 211 demodulates reception signals transmitted from the mobile station devices MS1 to MS4 using the information concerning the reception timing misalignment input by the reception-timing misalignment detector 215, the channel estimation value input by the channel estimator 212, and the uplink AMC information input by the control-data extractor 213. The demodulator 211 performs FFT on the reception signals, demultiplexes the subcarriers allocated to the mobile station devices based on the mapping information from the scheduler 204, and then performs frequency equalization. Then, the demodulator 211 performs IFFT to detect single-carrier modulation data. Although DFT-Spread OFDM is used as the uplink communication system for convenience of explanations, another single-carrier system, such as VSCRF-CDMA, or a multi-carrier system, such as OFDM, may be used.

The control-data extractor 213 demultiplexes data that is included in the demodulation data detected by the demodulator 211 and corresponds to the USCH section into reception data (USDCH) and control data (USCH). The control-data extractor 213 outputs uplink AMC information included in the control data to the demodulator 211, and downlink CQI information to the scheduler 204.

The base station device BS determines the AMC of uplink reception data based on a channel condition estimated from UPICH transmitted by the mobile station devices MS 1 to MS4, and indicates the AMC to the mobile station devices MS1 to MS4. Then, the mobile station devices MS 1 to MS4 perform channel encoding and modulation using the indicated AMC. Thereby, the base station device BS may store the AMC indicated to the mobile station devices MS 1 to MS4 and perform demodulation and channel decoding without the AMC being included in uplink control data.

The channel decoder 214 decodes demodulation data based on the AMC information from the control-data extractor 213, and outputs the information data to an upper layer.

The scheduler 204 includes the DL scheduler 205 that performs downlink scheduling and the UL scheduler 206 that performs uplink scheduling.

The DL scheduler 205 allocates channels for the mobile station devices MS 1 to MS4 to downlink chunks and timeslots TTIs based on the CQI information indicated by the mobile station devices MS1 to MS4 and transmission data to the mobile station devices MS 1 to MS4 which is received from the upper layer, and calculates AMC for scheduling for mapping information data, and encoding and modulating each channel data.

The UL scheduler 206 allocates channels for the mobile station devices MS 1 to MS4 to uplink chunks and timeslots TTIs based on the results of the uplink channel estimation performed on the mobile station devices MS1 to MS4 by the channel estimator 212, and resource allocation requests from the mobile station devices MS1 to MS4, and calculates AMC for scheduling of information data to be mapped, and encoding and modulating each channel data.

A given AMC is preliminarily set to the control data. The demodulator 211 demodulates the control data using the given modulation scheme preliminarily set. The channel decoder 214 decodes the control data with a given encoding rate preliminarily set. Illustrations of a channel encoder and a channel decoder for control data are omitted in FIG. 9.

The mobile station devices MS 1 to MS4 perform RACH random accesses upon establishment of an uplink initial wireless connection. It is assumed in the embodiments that data required for establishment of an initial wireless connection is basically included in RACH that is the minimum transmission frequency band. In the case of the mobile station device MS 1 whose mobile station class is 1.25 MHz, the bandwidth of RACH is basically 1.25 MHz upon establishment of an initial wireless connection. The mobile station device MS3 whose mobile station class is 5 MHz copies data for establishment of an initial wireless connection, and performs random accesses using multiple RACHs each having the minimum transmission frequency band, increasing the probability of a successful connection. For example, the mobile station device MS3 whose mobile station class is 5 MHz can simultaneously perform random accesses of four RACHs each having the minimum transmission frequency band.

The frequency bandwidth of each mobile station device which is the communication capacity is the frequency bandwidth by which each mobile station device can perform communication without changing the state of each mobile station device, i.e., the total bandwidth of all the selectable chunks to be transmitted or received. The state of each mobile station device indicates a setting set to each mobile station device, such as a setting of an oscillation frequency of the local oscillator included in the radio unit 130 of each mobile station device. For example, a mobile station device whose mobile station device class is 5MHz, i.e., the frequency bandwidth indicative of communication capacity is 5 MHz, can select any chunk included in a given frequency band of 5 MHz by changing the contents of mapping by the subcarrier mapper 310 without changing the state of the mobile station device when a chunk narrower than 5 MHz is transmitted.

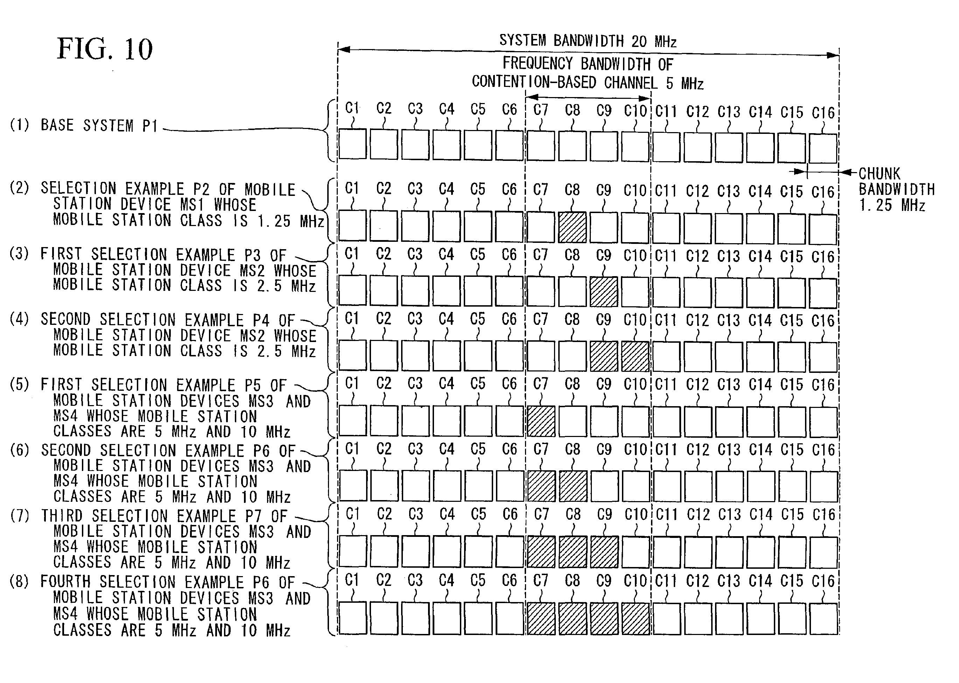

FIG. 10 shows selection examples of chunks at an RACH random access. As shown in FIG. 10 (1) showing a base system P1, explanations will be given with an assumption that a system bandwidth is 20 MHz and a frequency bandwidth of uplink CBCH is 5MHz. However, the present invention is not limited to the system. To explain both single-carrier and multi-carrier systems in uplink, chunks are conceptually shown with the use of not frequency spectra, but frequency bands. A case when a bandwidth of one chunk is 1.25 MHz is shown.

FIG. 10 (2) shows a selection example P2 of the mobile station device MS1 whose mobile station class is 1.25 MHz. In this case, the mobile station device MS1 whose mobile station class is 1.25 MHz performs an RACH random access by selecting any one of chunks (chunk C8 in this case) from the uplink-CBCH frequency band of 5 MHz.
An arbitral method is used for a method of initially selecting a chunk to be used for the RACH random access.

FIG. 10 (3) shows a selection example P3 of the mobile station device MS2 whose mobile station class is 2.5 MHz. In this case, the mobile station device MS2 whose mobile station class is 2.5 MHz performs an RACH random access by selecting any one of chunks (chunk C9 in this case) similarly to the selection example P2 of the mobile station device MS 1 whose mobile station class is 1.25 MHz shown in FIG. 10 (2).

FIG 10 (4) shows a second selection example P4 of the mobile station device MS2 whose mobile station class is 2.5 MHz. In this case, the mobile station device MS2 whose mobile station class is 2.5 MHz performs an RACH random access by selecting any two chunks (chunks C9 and C10 in this case) from the uplink-CBCH frequency band of 5 MHz. Although a case where adjacent chunks are selected is shown in FIG. 10 (4) showing the second selection example P4 of the mobile station device MS2 whose mobile station class is 2.5 MHz, the present invention is not limited hereto.

FIG. 10 (5) shows a first selection example P5 of the mobile station devices MS3 and MS4 whose mobile station classes are 5 MHz and 10 MHz. In this case, the mobile station devices MS3 and MS4 each perform an RACH random access by selecting any one of chunks (chunk C7 in this case) similarly to the selection example P2 of the mobile station device MS1 whose mobile station class is 1.25 MHz as shown in FIG 10 (2) and the first selection example P3 of the mobile station device MS2 whose mobile station class is 2.5 MHz as shown in FIG. 10 (3).

FIG. 10 (6) shows a second selection example P6 of the mobile station devices MS3 and MS4 whose mobile station classes are 5 MHz and 10 MHz. In this case, the mobile station devices MS3 and MS4 each perform an RACH random access by selecting any two chunks (chunks C7 and C8 in this case) similarly to the second selection example P4 of the mobile station device MS2 whose mobile station class is 2.5 MHz as shown in FIG. 10 (4).

FIG. 10 (7) shows a third selection example P7 of the mobile station devices MS3 and MS4 whose mobile station classes are 5 MHz and 10 MHz. In this case, the mobile station devices MS3 and MS4 each perform an RACH random access by selecting any three chunks (chunks C7, C8, and C9 in this case) from the uplink-CBCH frequency band of 5 MHz.

FIG 10 (8) shows a fourth selection example P8 of the mobile station devices MS3 and MS4 whose mobile station classes are 5 MHz and 10 MHz. In this case, the mobile station devices MS3 and MS4 each perform an RACH random access by selecting all four chunks (chunks C7 to C10) included in the uplink-CBCH frequency band of 5 MHz.

In the first selection example P5 to the fourth selection example P8 of the mobile station devices MS3 and MS4 whose mobile station classes are 5 MHz and 10 MHz as shown in FIGS. 10 (5) to (8), the mobile station devices MS3 and MS4 may be ones whose mobile station classes are 5 MHz or more, for example, 15 MHz or 20 MHz.

When an RACH random access is performed using multiple chunks, a method of copying one RACH signal multiple times and transmitting a similar RACH signal at each chunk, and a method of transmitting a wideband RACH signal using multiple chunks are considered. Hereinafter, the former method is explained.

In the former method, the base station device BS can detect the mobile station devices MS 1 to MS4 by detecting RACH of one chunk. In the latter method, the base station device BS has to detect all the RACHs transmitted by a particular mobile station device. The mobile station device MS3 of a wideband mobile station class, for example, 5 MHz can increase the probability of a successful connection by performing RACH random accesses using multiple chunks. However, the mobile station device MS 1 of a narrowband mobile station class, for example, 1.25 MHz has a higher probability of a collision.

For this reason, it is preferable that the base station device BS preliminarily determines the number of chunks selectable for RACH random accesses performed by the mobile station devices MS1 to MS4 based on the QoS (Quality of Service) and the number of connected communication devices in a cell, and indicates the information to the mobile station devices MS 1 to MS4 in downlink. The mobile station devices MS 1 to MS4 select the number of chunks based on the indicated reference information to perform RACH random accesses.

When many mobile station devices MS 1 whose mobile station class is 1.25 MHz are present in a cell, for example, the mobile station device MS3 whose mobile station class is 5 MHz performs RACH random accesses possibly using one chunk if a high QoS is not required.
Although the explanations are given here with an assumption that the minimum frequency bandwidth of RACH is 1.25 MHz upon establishment of an initial wireless connection, bandwidths of 2.5 MHz, 5 MHz, or 10 MHz may be used based on the configuration of a system. For example, the minimum frequency bandwidth of RACH may be 2.5 MHz in a system where the mobile station device MS1 whose mobile station class is 1.25 MHz needs not be supported, and the mobile station class of 2. 5 MHz of the mobile station device MS2 is set to the minimum mobile station class that can be communicated.

Each of the mobile station devices MS1 to MS4 randomly selects a chunk to be used for an RACH random access. However, random accesses from multiple mobile station devices are instantaneously concentrated at a certain chunk even if a statistically-random selection method is used, and a collision of signals among the mobile station devices occurs in some cases. Since an RACH random access begins with transmission from a mobile station device, the base station device BS and the mobile station device cannot communicate each other to specify a position of a chunk, only a statistically-random selection method can be used.

When a collision of RACH random accesses occurs, an RACH random access is usually retried after some time interval. Providing a time interval before an RACH random access is retried is called "random backoff". The time interval is called a "random backofftime". An upper limit is set under which the time that the mobile station device terminates a transmission or the time that the mobile station device resumes a transmission is randomly set to prevent the mobile station devices causing the collision from continuously retransmitting RACH which leads to continuous collisions.

However, if a long random backoff time is set, RACH retransmission cannot immediately be performed. For this reason, a mobile station device requiring immediate retransmission of a random access is made to immediately perform retransmission of a random access without increasing the probability of a collision in first to fourth embodiments.

An RACH random access upon establishment of an initial wireless connection is a process to connect a radio link among the base station device BS and each of the mobile station devices MS 1 to MS4, i.e., a process to connect physical layers thereamong. On the other hand, there are multiple types of modes in which connection of a physical layer is not established in the currently suggested MAC layer (logical layer upper than a physical layer). One is called an idle mode (first communication state) in which the MAC layer is not connected among the base station device BS and the mobile station devices MS1 to MS4. Another one is called a dormant mode (second communication state) in which the MAC layer is connected among the base station device BS and each of the mobile station devices MS 1 to MS4. A difference between the two modes is the speed of initiating transmission and reception of data. Since connection of the MAC layer is maintained in the dormant mode, there is no need to connect the MAC layer. Thereby, transmission and reception of data can immediately be initiated compared with the case of the idle mode. The dormant mode is a MAC mode suitable to the mobile station devices MS 1 to MS4 of users utilizing services, such as web browsing.

For example, users download image data from the base station device BS. After the users finish watching images displayed on displays of the mobile station devices MS1 to MS4, the users download the next image data. While the users watch the images, the users do not download data. Therefore, it is a waste of resources to keep radio links connected. However, data is repeatedly downloaded after some time interval in such services. As a result, it takes a long time to make a connection if the Mac layer is connected every time data is downloaded, and satisfactory services cannot be provided to users. For this reason, the mobile station devices in such a state enter the dormant mode to stand by with only the radio link being disconnected if data is not downloaded.

This is effective on the system side. There is no need to allocate radio resources for transmitting messages required for connection of the MAC layer in each case. As a result, limited resources of the entire system can effectively be used. Not all of the mobile station devices MS1 to MS4 can maintain connection of the MAC layer. Therefore, the mobile station devices MS 1 to MS4 that are not providing the above services enter the idle mode and stand by. In summary, the dormant mode is a state in which a DRX (Discontinuous Reception) section or a DTX (Discontinuous Transmission) is included in an active mode which is an operating state on the MAC layer.

### [First Embodiment]

In the present embodiment, the mobile station devices MS 1 to MS4 in the dormant mode sets an upper limit of a random backoff time to be smaller than that in the idle mode, below which a random backoff time is set. In this manner, the mobile station devices MS 1 to MS4 in the dormant mode can shorten the period required for retransmission, i.e., for establishment of a wireless connection, compared with a mobile station device in the idle mode, enabling enhancement of the original effect of the dormant mode and provision of preferred services.

A method for the mobile station devices MS 1 to MS4 in the dormant and idle modes to retransmit RACH is explained with reference to the accompanying drawings.

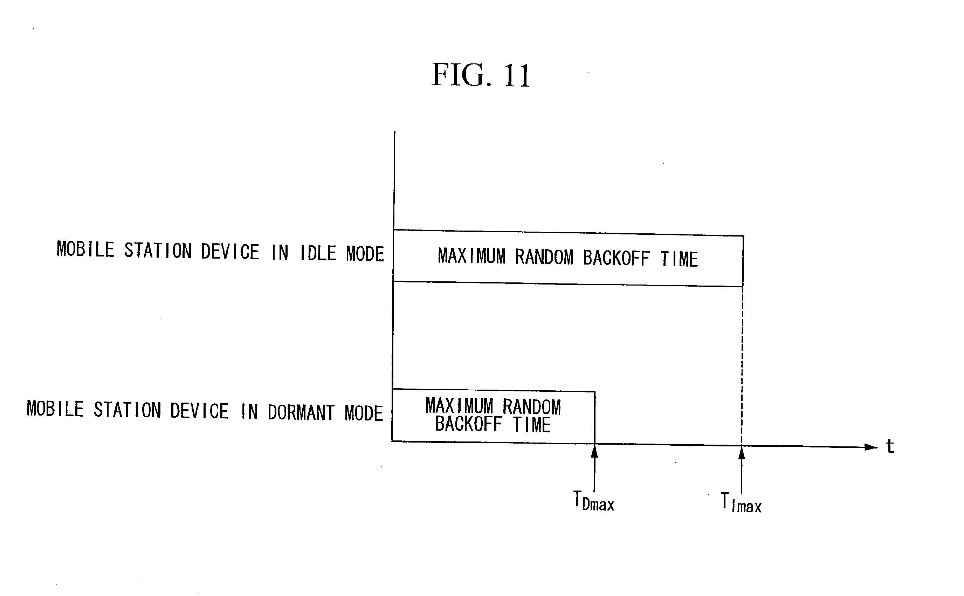

FIG 11 shows the maximum random backoff times concerning retransmission of RACH in the idle and dormant modes. The CBCH schedulers 105 of the mobile station devices MS 1 to MS4 in the idle mode obtain scheduling information indicating that the mobile station devices MS 1 to MS4 are in the idle mode. If the CBCH scheduler 105 does not receive a response from the base station device BS through the control-data extractor 113 for a given period after the random access has been performed, the CBCH scheduler 105 sets the maximum random backoff time to T_{Imax}, below which a random backoff time is set using a random algorithm, and selects a timeslot TTI for retrying a random access.

Similarly, the CBCH schedulers 105 of the mobile station devices MS1 to MS4 in the dormant mode obtain scheduling information indicating that the mobile station devices MS 1 to MS4 are in the dormant mode. If the CBCH scheduler 105 does not receive a response from the base station device BS through the control-data extractor 113 for a given period after the random access has been performed, the CBCH scheduler 105 sets the maximum random backoff time to T_{Dmax}, below which a random backoff time is set using a random algorithm, and selects a timeslot TTI for retrying a random access.
The maximum random backoff time in each mode is preliminarily set such that T_{Imax}>T_{Dmax}. Thereby, the mobile station devices MS1 to MS4 in the dormant mode averagely perform retransmission earlier than those in the idle mode.

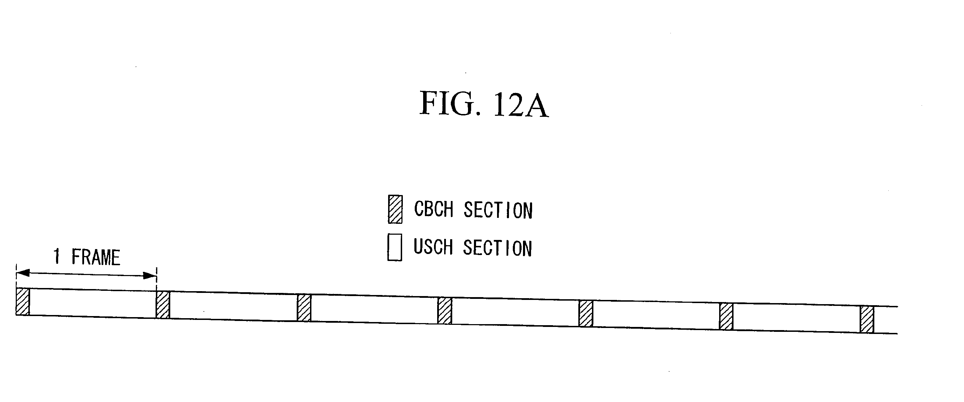

FIGS. 12A to 12C show examples of RACH retransmission timings in the idle and dormant modes of the first embodiment. As shown in FIG. 12A, a case where one frame includes one continuous uplink CBCH section and one continuous USCH section.

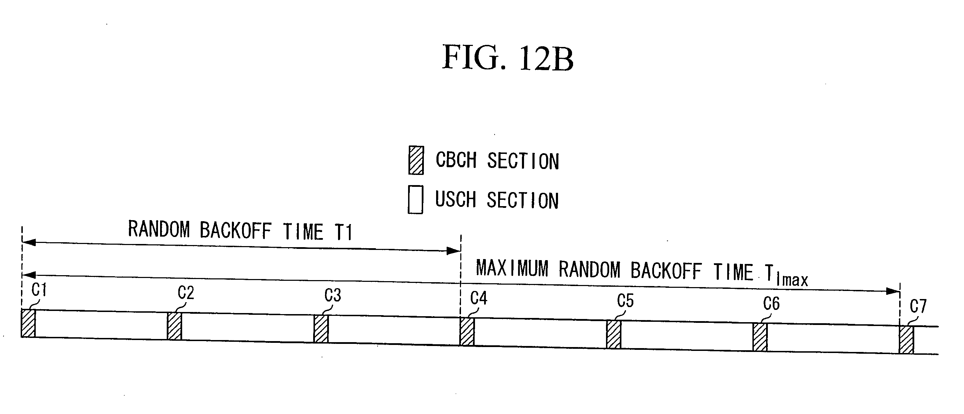

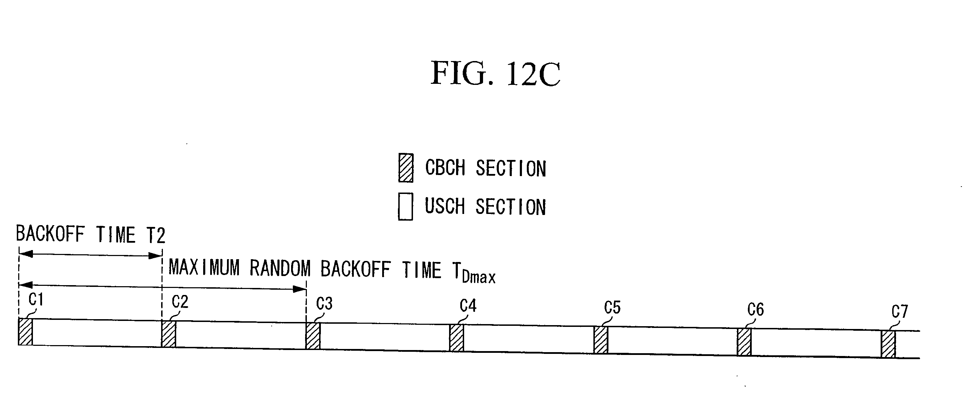

FIGS. 12B and 12C show examples of random access retransmission timings when the maximum random backoff time T_{Imax} in the idle mode is 6 frames, the maximum random backoff time T_{Dmax} in the dormant mode is 2 frames, and random accesses of the mobile station devices MS1 to MS4 in the dormant and idle modes has collided with each other at the CBCH section C1.

When the mobile station devices MS1 to MS4 in the idle mode shown in FIG. 12B fail in RANCH random accesses at the uplink CBCH section C1, the mobile station devices set a period of 3 frames that is shorter than the maximum random backoff time T_{Imax} to a random backoff time T1. As a result, the mobile station devices retransmit RACH at an uplink CBCH section C4 that is 3 frames after the uplink CBCH section C1.

On the other hand, when the mobile station devices MS 1 to MS4 in the dormant mode shown in FIG. 12 fail in RACH random accesses at the uplink CBCH section C1, the mobile station devices set a period of 1 frame that is shorter than the maximum random backoff time T_{Dmax} to a random backofftime T1. As a result, the mobile station devices retransmit RACH at an uplink CBCH section C2 that is 1 frame after the uplink CBCH section C1.

As a result, the mobile station devices MS 1 to MS4 in the dormant mode set thereto a random backoff time shorter than that set to the mobile station devices MS 1 to MS4 in the idle mode, and adequately and quickly retransmit RACH. Thereby, the RACH response time and the period required for establishment of wireless communication can be reduced.

Although only the upper limit of a random backoff time is changed according to a MAC mode, the lower limit thereof may be changed. If the minimum random backoff time in the idle mode is set to a value greater than the maximum random backoff time in the dormant mode, the mobile station devices MS 1 to MS4 in the dormant mode always set thereto a random backoff time shorter than that set to mobile station devices MS 1 to MS4 in the idle mode to retransmit RACH. Thereby, the RACH response time of the mobile station devices MS1 to MS4 in the dormant mode and the period required for establishment of a wireless communication can be reduced.

It has been explained in the first embodiment that a random backoff time is controlled for retransmission of RACH according to a MAC mode that is a state of communication connection as an example of a state between the base station and each of the mobile station devices MS 1 to MS4. However, the random backoff time may be controlled according to types of communication services as a state between the base station and each of the mobile station devices MS1 to MS4. A mobile station device requiring a high QoS for a service type of communication, such as a video phone, sets the maximum random backoff time to be shorter so that the period required for establishment of a connection can be reduced compared with a mobile station device requiring a low QoS for a service type of communication, such as packet communication. Thereby, a preferred system that can adequately provide services according to a required QoS can be implemented.

### [Second Embodiment]

In the second embodiment, the mobile station devices MS2 to MS4 in the dormant mode set thereto a random backoff time that is shorter on average than that set to the mobile station device MS2 to MS4 in the idle mode. Additionally, the mobile station devices MS2 to MS4 in the dormant mode can select a chunk to be used for retransmission of RACH from a wider range of frequencies compared with the mobile station devices MS2 to MS4 in the idle mode. In this manner, the probability of a collision of random accesses among the mobile station devices MS2 to MS4 in the dormant mode and a period required for retransmission performed by the mobile station devices MS2 to MS4 in the dormant mode can be reduced. In other words, the mobile station devices MS2 to MS4 in the dormant mode can reduce the period required for establishment of a wireless connection and enhance the original effect of the dormant mode, and preferred services can be provided.

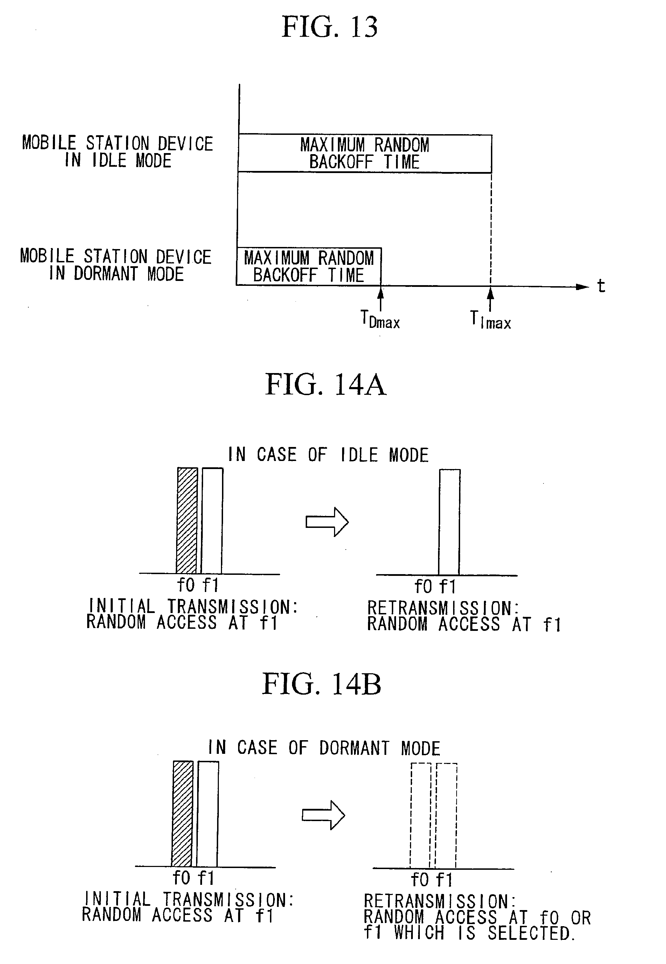

A method for the mobile station devices MS2 to MS4 in the dormant and idle modes to retransmit RACH in the second embodiment is explained with reference to the accompanying drawings. FIG. 13 shows examples of the maximum random backoff times concerning retransmission of RACH in the idle and dormant modes. FIGS. 14A and 14B show example of chunks to be used for retransmission of RACH in the idle and dormant modes.

As shown in FIG. 13, the mobile station devices MS2 to MS4 in the idle mode set thereto the maximum random backoff time T_{Imax} below which a random backoff time is set using a random algorithm. The mobile station devices MS2 to MS4 in the dormant mode set thereto the maximum random backoff time T_{Dmax} below which a random backoff time is set using a random algorithm where T_{Imax}>T_{Dmax}. Thereby, the probability of the mobile station devices MS2 to MS4 in the dormant mode performing retransmission earlier than the mobile station devices MS2 to MS4 in the idle mode can be increased.

Since the maximum random backoff time T_{Dmax} is short, random accesses of the mobile station devices MS2 to MS4 in the dormant mode collide with each other, and thereby the probability of a collision of random accesses retransmitted by the mobile station devices MS2 to MS4 increases. To avoid this and decrease the probability of a collision upon retransmission, available choices of chunks to be used for retransmission of RACH are increased.

When the mobile station devices MS2 to MS4 in the idle mode transmit RACH at a chunk corresponding to a frequency f1 and do not receive a response from the base station device BS for a given period thereafter, the CBCH schedulers 105 of the mobile station devices MS2 to MS4 select a random backoff time that is equal to or less than the maximum random backoff time T_{Imax} as shown in FIG. 14A. Then, the CBCH schedulers 105 allocate the RACH through which no response has been received to a position in the same chunk corresponding to the frequency f1 used for the initial transmission and in the uplink CBCH section after the random backoff time has elapsed.

On the other hand, when the mobile station devices MS2 to MS4 in the dormant mode transmit RACH at a chunk corresponding to a frequency f1 and do not receive a response from the base station device BS for a given period thereafter, the CBCH schedulers 105 of the mobile station devices MS2 to MS4 select a random backoff time that is equal to or less than the maximum random backoff time T_{Dmax} as shown in FIG. 14B. Then, the CBCH schedulers 105 select, for example, a chunk corresponding to a frequency f0 from given available chunks (chunks corresponding to frequencies f0 and f1 in this case), and allocates the RACH through which no response has been received to a position in the selected chunk and in the uplink CBCH section after the random backoff time has elapsed.

If the maximum random backoff time T_{Dmax} in the dormant mode is set to half that in the idle mode T_{Imax}, for example, the probability of a collision among the mobile station devices MS2 to MS4 in the dormant mode is doubled. However, if available chunks to be used for retransmission of RACH in the dormant mode are double those in the idle mode, the probability of a collision is halved, and the probability of a collision among the mobile station devices MS2 to MS4 in the dormant mode can be the same as that among the mobile station devices MS2 to MS4 in the idle mode as a whole.

In this manner, the mobile station devices MS2 to MS4 in the dormant mode set thereto a random backoff time shorter than that set to the mobile station devices MS2 to MS4 in the idle mode, and increase available choices of chunks so that the probability of a collision upon retransmission can be decreased. Thereby, RACH can adequately and quickly be retransmitted. Additionally, repetition of collisions upon retransmission can be prevented. Therefore, an RACH response time and a period required for establishment of a wireless connection can be reduced.

The RACH retransmission timings in the idle and dormant modes in the second embodiment are similar to those in the first embodiment as shown in FIG. 13. In other words, the maximum random backoff time may be changed according to a MAC mode. Alternatively, the maximum and the minimum backoff times may be changed. At this time, the probability of a collision is inversely proportional to the difference between the maximum and the minimum random backoff times, and to the number of available chunks.

For example, it is assumed that the maximum random backoff time in the idle mode is 4T, the minimum random backofftime is T, i.e., the difference between the maximum and the minimum random backofftime is 4T-T=3T. Further, the maximum random backoff time in the dormant mode is T, the minimum random backoff time is 0, i.e., the difference between the maximum and the minimum random backoff times is T-0=T, and the number of available chunks is 3. As a result, a random backoff time in the dormant mode is set to be shorter than that in the idle mode, and the probability of a collision among the mobile station devices MS2 to MS4 in the dormant mode is identical to that among the mobile station devices MS2 to MS4 in the idle mode. Thereby, a period from the beginning of a random access to a successful random access in the dormant mode can be reduced.

In the above explanations, only the mobile station devices MS2 to MS4 in the dormant mode have multiple choices of chunks to be used for retransmission of the RACH. However, the mobile station devices MS2 to MS4 in the idle mode may have multiple choices of chunks to be used for retransmission of RACH in a similar manner. In this case, the number of choices of chunks to be used for retransmission of RACH available to the mobile station devices MS2 to MS4 in the dormant mode may be greater than that available to the mobile station devices MS2 to MS4 in the idle mode.

It has been explained in the second embodiment that a random backoff time and the number of available chunks to be used for retransmission of RACH are controlled according to a MAC mode which is one of connection states between the bases station device BS and each of the mobile station deices MS2 to MS4. However, the random backoff time and the number of available chunks may be controlled according to a service type of communication between the base station device BS and each of the mobile station devices MS2 to MS4. For the mobile station devices MS2 to MS4 requiring a high QoS for a service type of communication, such as a video phone, the maximum random backoff time is set to be short and the number of available chunks is set to be small. Thereby, the period required for establishment of a connection can be reduced compared with the mobile station devices MS2 to MS4 requiring a low QoS for a service type of communication, such as packet communication. Therefore, a preferred system that can adequately provide services according to a required QoS can be implemented.

### [Third Embodiment]

In the third embodiment, the mobile station devices MS 1 to MS4 control the maximum random backoff time T_{Dmax} according to the number of selectable chunks upon retransmission of RACH.

The number of chunks and a frequency range which are selectable upon retransmission of RACH differ according to mobile station classes or operation modes of the mobile station devices MS1 to MS4.
The mobile station classes indicate frequency bandwidths in which the radio units 130 of the mobile station devices MS1 to MS4 can perform transmission and reception at one time. The mobile station devices MS1 to MS4 can select a chunk within the frequency bands by baseband processing performed by the modulators 103 and the OFDM demodulators 111, but have to change oscillation frequencies of the local oscillators included in the radio units 130 in order to select a chunk outside the frequency bands. Therefore, a control delay caused by changing settings from digital units to analog units and a delay until a variation in the oscillation frequency is stabilized occur. As a result, it takes a time to resume transmission when transmission is performed outside the frequency band, and a retry of an RACH random access cannot immediately be performed. For this reason, the mobile station devices MS 1 to MS4 in the dormant mode in the third embodiment limit selectable chunks to be used for retransmission of a random access to chunks within frequency bands based on the mobile station classes.

Transmission and reception in multiple frequency bands are controlled based on not the mobile station classes, but operation modes in some cases. In other words, there is a case where a mobile station device whose radio unit 130 can perform wideband transmission and reception operates in a narrower frequency band. For example, it is assumed that all the mobile station devices included in a mobile communication system are of mobile station classes of 10 MHz, perform transmission or reception at 1.25 MHz, 2.5 MHz, 5 MHz, or 10 MHz as operation modes, and are prohibited from performing transmission or reception at wider frequencies than the frequencies set as the operation modes. This assumption is made when frequency bands are limited according to a difference in service types for convenience of the mobile station system. In this case, selectable chunks that can be used for a mobile station device in the dormant mode to retransmit a random access are limited to chunks within a frequency band based on an operation mode.

In the third embodiment, a mobile station device in the operation mode of 1.25 MHz is not distinguished from a mobile station device whose mobile station class is 1.25 MHz, and denoted as a mobile station device MS1. Similarly, a mobile station device in the operation mode of 2.5 MHz is denoted as a mobile station device MS2. A mobile station device in the operation mode of 5 MHz is denoted as a mobile station device MS3. A mobile station device in the operation mode of 10 MHz is denoted as a mobile station device MS4.

As explained above, the number of chunks which can be selected by mobile station devices MS 1 to MS4 upon retransmission of RACH differs depending on mobile station classes or operation modes. The thing that the number of selectable chunks differs indicates that the probability of a collision differs in terms of randomness in frequency domains, and that the probability of a collision when the number of selectable chunks is large is smaller than that when the number of selectable chunks is small. Therefore, the probability of a collision among the mobile station devices MS 1 to MS4 in the dormant mode can adequately be controlled by controlling the maximum random backoff time in the dormant mode based on the number of selectable chunks upon retransmission of RACH.

More specifically, the maximum random backoff time of the mobile station device whose mobile station class is high or whose operation mode is large is set to be short so that the probabilities of RACH collisions among the mobile station devices MS1 to MS4 in the dormant mode are equalized to some extent, and the mobile station devices MS1 to MS4 in the dormant mode can perform retransmission of RACH as soon as possible. Alternatively, the smaller the mobile station class or the operation mode is, the longer maximum backoff time is set to the mobile station device. Additionally, the probabilities of RACH collisions among the mobile station devices MS 1 to MS4 in the dormant mode can further be equalized by the mobile station devices MS 1 to MS4 setting the maximum random backoff times to be shorter in proportion to the number of selectable chunks with the mobile station devices MS 1 to MS4 in the idle mode as references.

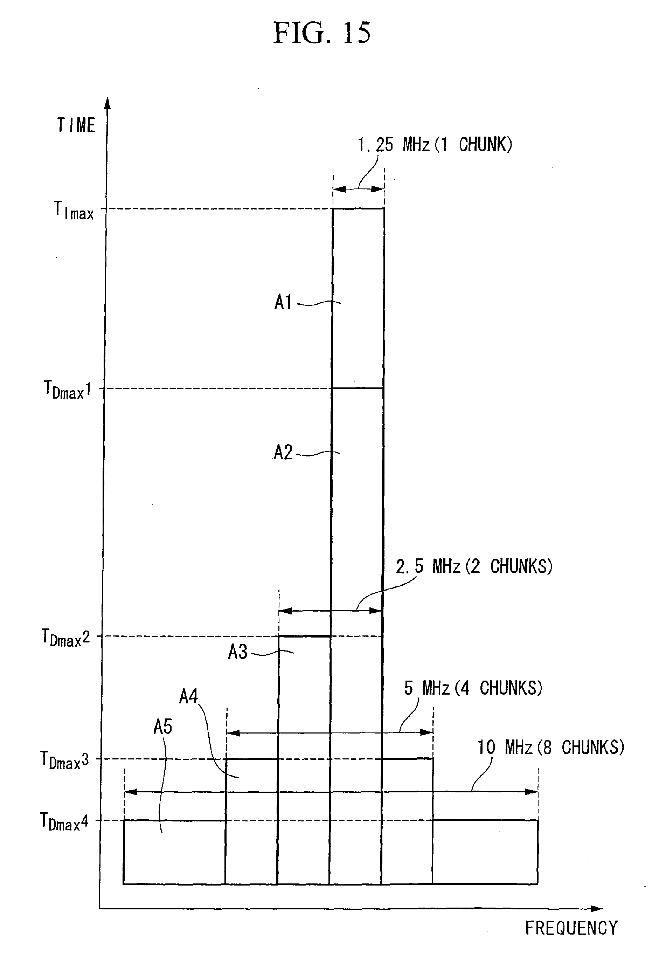

FIG 15 shows examples of chunks and timeslots to be selectable for retransmission of random accesses when a bandwidth of a chunk is 1.25 MHz, and the mobile station devices MS 1 to MS4 of 1.25 MHz, 2.5 MHz, 5 MHz, and 10 MHz are in the idle and dormant modes.

In FIG. 15, the mobile station devices MS 1 to MS4 of all the mobile station classes in the idle mode allocates RACH to be retransmitted in a region A1 defined by the chunk used for the initial random access and the maximum random backoff time T_{Imax}. In other words, the CBCH schedulers 105 allocate RACH to be retransmitted in the region A1 when the mobile station devices MS 1 to MS4 are in the idle mode.

The mobile station device MS1 whose mobile station class is 1.25 MHz in the dormant mode allocates RACH to be retransmitted in a region A2 defined by the maximum random backoff time T_{Dmax} and a chunk (corresponding to a frequency band of 1.25 MHz) by which transmission and reception can be performed without changing the oscillation frequency of the local oscillator used when the initial RACH is allocated. In other words, the CBCH scheduler 105 allocates RACH to be retransmitted in the region A2 when the mobile station device MS 1 whose mobile station class is 1.25 MHz is in the dormant mode.

The mobile station device MS2 whose mobile station class is 2.5 MHz in the dormant mode allocates RACH to be retransmitted in a region A3 defined by the maximum random backoff time T_{Dmax2} and two chunks (corresponding to a frequency band of 2.5 MHz) by which transmission and reception can be performed without changing the oscillation frequency of the local oscillator used when the initial RACH is allocated. In other words, the CBCH scheduler 105 allocates RACH to be retransmitted in the region A3 when the mobile station device MS2 whose mobile station class is 2.5 MHz is in the dormant mode.

The mobile station device MS3 whose mobile station class is 5 MHz in the dormant mode allocates RACH to be retransmitted in a region A4 defined by the maximum random backoff time T_{Dmax3} and four chunks (corresponding to a frequency band of 5 MHz) by which transmission and reception can be performed without changing the oscillation frequency of the local oscillator used when the initial RACH is allocated. In other words, the CBCH scheduler 105 allocates RACH to be retransmitted in the region A4 when the mobile station device MS3 whose mobile station class is 5 MHz is in the dormant mode.

The mobile station device MS4 whose mobile station class is 10 MHz in the dormant mode allocates RACH to be retransmitted in a region A5 defined by the maximum random backoff time T_{Dmax}4 and a chunk (corresponding to a frequency band of 10 MHz) by which transmission and reception can be performed without changing the oscillation frequency of the local oscillator used when the initial RACH is allocated. In other words, the CBCH scheduler 105 allocates RACH to be retransmitted in the region A5 when the mobile station device MS4 whose mobile station class is 10 MHz is in the dormant mode.

Thus, the mobile station devices MS 1 to MS4 in the dormant mode set upper limits of the random backoff times based on the number of available chunks. Thereby, the mobile station devices MS 1 to MS4 can set the random backoff times to be as short as possible while the probability of collisions are averaged. As a result, the mobile station devices MS 1 to MS4 immediately and adequately retransmit RACH and prevent a repetition of collisions at the same time. Thereby, the RACH response time and the period required for establishment of a wireless connection can be reduced.

Similarly to the first and second embodiments, it has been explained in the third embodiment that the number of available chunks to be used for retransmission, and random backoff times are controlled based on a MAC mode that is one of connection states between the base station device BS and each of the mobile station devices MS1 to MS4. However, the random backoff time and the number of available chunks may be controlled based on a service type of communication between the base station device BS and each of the mobile station devices MS1 to MS4. For the mobile station devices MS1 to MS4 requiring a high QoS for a service type of communication, such as a video phone, the maximum random backoff time is set to be short and the number of available chunks is set to be large. Thereby, a period required for establishment of a connection can be reduced compared with the mobile station devices MS2 to MS4 requiring a low QoS for a service type of communication, such as packet communication. Therefore, a preferred system that can adequately provide services according to a required QoS can be implemented.

Hereinafter, a sequence between the base station device BS and each of the mobile station devices MS 1 to MS4 upon RACH random accesses according to the first to third embodiments is explained.
After the power is turned on, the mobile station devices MS 1 to MS4 perform selection of PLMN (Public Land Mobile Network) and a cell search. The base station device BS periodically transmits DCPICH, DSCH, and DCCCH. Each of the mobile station devices MS1 to MS4 selects a cell targeted for connection from DCPICH and DSCH, and obtains, from DCCCH as broadcast information, information concerning the base station device, such as a system bandwidth, a CBCH frequency bandwidth, and a frequency position. After the information concerning the base station is obtained, the mobile station devices MS1 to MS4 perform position registrations, and then enter the idle mode.

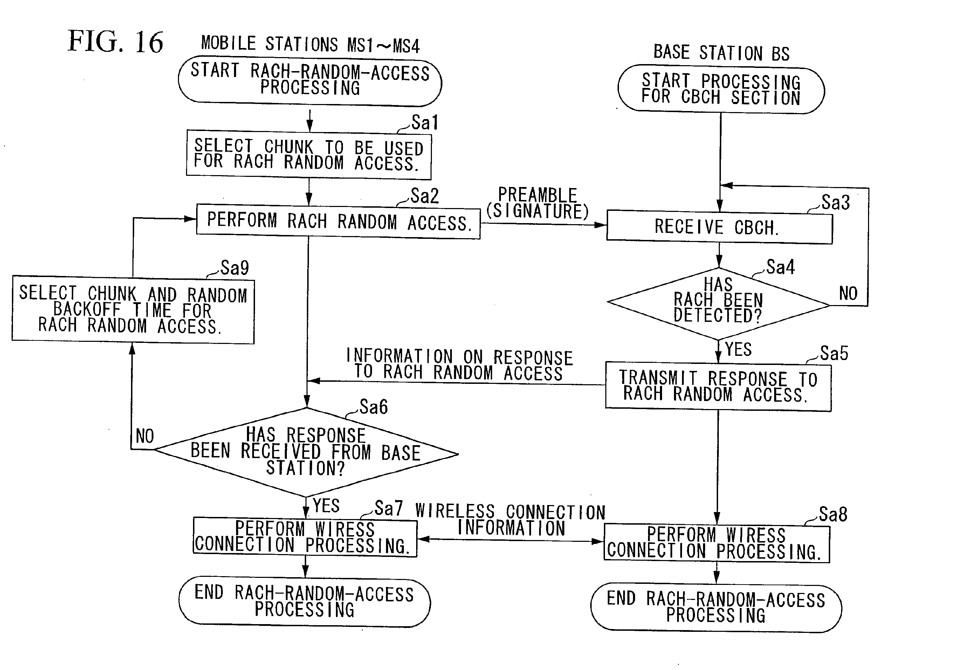

Upon a position reregistration, initial connection for transmission and reception of packets, or reconnection during packet communication, each of the mobile station devices MS1 to MS4 performs an RACH random access using uplink CBCH. FIG. 16 shows a flowchart of RACH random access processing between the base station device BS and each of the mobile station devices MS1 to MS4.

The mobile station devices MS 1 to MS4 select chunks to be used for RACH random accesses for establishment of an initial connection or reconnection using an arbitral statistically-random selection algorithm (Sa 1), and transmit RACH (Sa 2). The data that the mobile station devices MS1 to MS4 transmit to the base station BS by the RACH random accesses for establishment of an initial connection includes information for identifying each mobile station device which is called a signature in W-CDMA (hereinafter, "signature"), and information for synchronizing the base station device BS and each of the mobile station devices MS1 to MS4 (hereinafter, "preamble"). Additionally, information concerning each mobile station device and wireless-connection related information may be included or transmitted to the base station device BS in subsequent processing. For simplicity of explanations, a case where only the preamble is transmitted by the RACH random access for establishment of an initial connection is explained.

The base station device BS receives uplink CBCH (Sa 3). When the RACH transmitted by the mobile station devices MS 1 to MS4 is detected from the uplink CBCH (Sa 4), the base station device BS performs scheduling for allocating channels to be used for transmission of data to the mobile station devices MS1 to MS4 with the use of USCH. Then, the base station device BS detects reception timing misalignment between the base station device BS and each of the mobile station devices MS1 to MS4 from the preamble. Then, the base station device BS transmits the signature, the synchronization information, and the scheduling information which are transmitted by the mobile station device MS 1 to MS4 to the mobile station device MS1 to MS4 using DSCSCH (Sa 5). Alternatively, the base station device BS transmits the above information using DCCCH at the head of a subsequent frame. When the base station device BS receives CBCH, but does not detect RACH transmitted by the mobile station devices MS1 to MS4 (Sa 4), the base station device BS does not perform the processing concerning RACH.

The mobile station devices MS1 to MS4 receive DCCCH or DSCSCH whose frequency band is preliminarily set, and monitor whether or not the signatures transmitted by the mobile station devices MS1 to MS4 are included therein. When data addressed to the mobile station devices MS 1 to MS4 has not been received for a given period (Sa 6), chunks and random backoff times to be used for retransmission of RACH are selected as explained in the first or third embodiment (Sa 9).

In other words, in the first embodiment, the mobile station devices MS 1 to MS4 in the dormant mode set the maximum random backoff time that is the upper limit of the algorithm of generating a random backoff time to a smaller value compared with that in the idle mode. In the second embodiment, the mobile station devices MS2 to MS4 in the dormant mode set the maximum random backoff time that is the upper limit of the algorithm of generating a random backoff time to a smaller value compared with that in the idle mode, and select a chunk to be used for retransmission of RACH from available chunks. In the third embodiment, the mobile station devices MS1 to MS4 in the dormant mode set the maximum random backofftime that is the upper limit of the algorithm of generating a random backoff time to a smaller value compared with that in the idle mode, and select a chunk to be used for retransmission of RACH from available chunks such that a relationship between the number of the available chunks and the maximum random backoff time is kept constant.

Each of the mobile station devices MS1 to MS4 retries an RACH random access at the timeslot defined by the chunk and the random backoff time selected at step Sa 9 (Sa 2).

When the signatures transmitted by the mobile station devices MS 1 to MS4 are included in the DSCSCH (Sa 6), the mobile station devices MS 1 to MS4 demodulates the DSCSCH to extract the synchronization information and the scheduling information. Then, the mobile station devices MS1 to MS4 transmit information concerning the mobile station devices MS 1 to MS4, such as mobile station classes, and information required for scheduling, such as QoS or an amount of data. The base station device BS performs scheduling based on the information concerning the mobile station devices MS 1 to MS4, such as mobile station classes, and information required for scheduling, such as QoS or an amount of data, and then transmits scheduling information to the mobile station devices MS1 to MS4. When uplink scheduling for the mobile station devices MS 1 to MS4 is performed, the mobile station devices MS 1 to MS4 initiate and perform position registrations to an upper layer. Upon the position registration, IMSI (International Mobile Subscriber Identity) or IMEI (International Mobile Equipment Identity), such as TMSI (Temporary Mobile Subscriber Identity) and TMEI (Temporary Mobile Equipment Identity), or temporary IP addresses are transmitted to the mobile station devices MS 1 to MS4 with acknowledgement of the position registration. Simultaneously, a key exchange protocol or authentication is performed. Thus, the wireless connection processing is complete (Sa 7 and Sa 8).

### [Fourth Embodiment]

The present invention is also applicable to a retry of a normal random access of uplink CBCH other than RACH.
In a fourth embodiment, the mobile station devices MS1 to MS4 try uplink-CBCH random accesses when the mobile station devices MS 1 to MS4 have data to be transmitted, but have not been allocated uplink USCH, or when the mobile station devices MS 1 to MS4 transmit an extensively small amount of data to the base station device BS. The uplink-CBCH random access is performed through CBCH to transmit, in USCH, URCH (Uplink request Channel) for requesting a channel allocation or to transmit FACH (Fast Access Channel) including a small amount of data.

When URCH is transmitted, i.e., a channel allocation is requested, the CBCH schedulers 105 of the mobile station devices MS1 to MS4 select chunks to be used for URCH random accesses similarly to the RACH random accesses for establishment of an initial wireless connection. After the base station device BS receives scheduling information, transmission of data using USCH is performed.

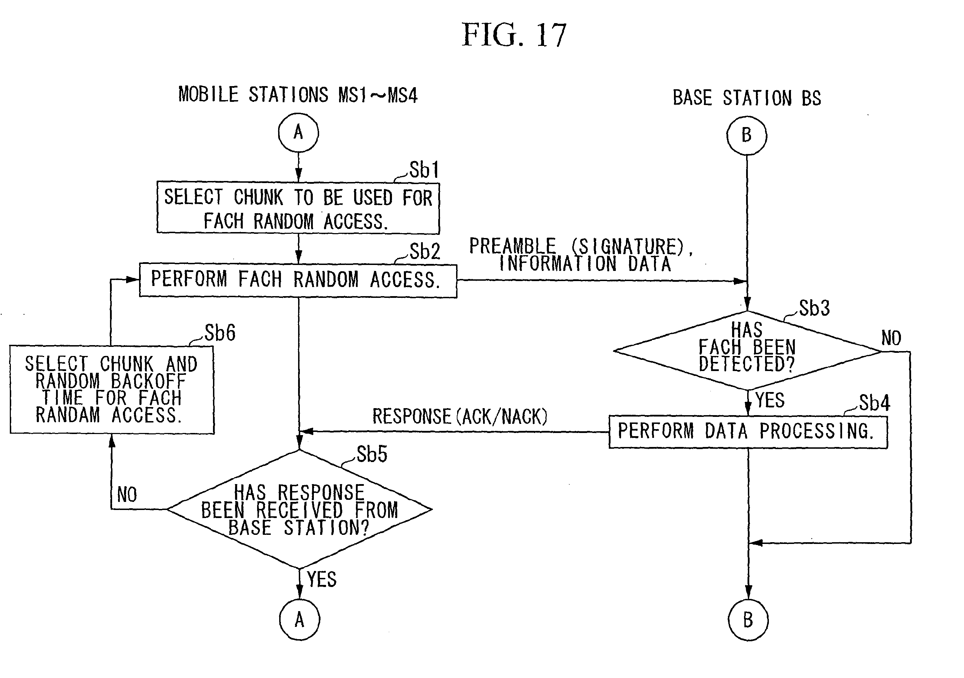

FIG. 17 shows a sequence of a random access of FACH to be used for transmission of a small amount of normal data when FACH is transmitted. Similarly to the RACH random access for establishment of an initial connection, the CBCH schedulers 105 of the mobile station devices MS1 to MS4 select chunks to be used for FACH random accesses (Sb 1) and try FACH random accesses (Sb 2). Data to be transmitted over FACH includes a signature, a preamble, and transmission data. When FACH transmitted by the random access performed by the mobile station devices MS1 to MS4 is detected (Sb 3), the base station device BS performs data processing, such as demodulation of data, and transmits response information, such as ACK/NACK with respect to the transmission data included in the FACH, to the mobile station devices MS1 to MS4 using DSCSCH (Sb 4). Alternatively, the base station device BS transmits the response information using DCCCH at the head of a subsequent frame. When the FACH transmitted from the mobile station devices MS1 to MS4 is not detected (Sb 3), the base station device BS proceeds to processing of scheduling channel sections without performing data processing.

The mobile station devices MS1 to MS4 receive DCCCH or DSCSCH whose frequency band is preliminarily determined, and monitor whether or not response information is included therein. When data addressed to the mobile station devices MS1 to MS4 has not been received for a given period (Sb 5), the mobile station devices MS 1 to MS4 control random backoff times and selects chunks which are to be used for retransmission of FACH (Sb 6), similarly to the RACH random access explained in the first to third embodiments.

In the first embodiment, the mobile station devices MS1 to MS4 in the dormant mode set the maximum random backoff time that is the upper limit of an algorithm of generating a random backoff time to a smaller value compared with that in the idle mode. In the second embodiment, the mobile station devices MS1 to MS4 in the dormant mode set the maximum random backoff time that is the upper limit of the algorithm of generating a random backoff time to a smaller value compared with that in the idle mode, and select a chunk to be used for retransmission of RACH from available chunks. In the third embodiment, the mobile station devices MS1 to MS4 in the dormant mode set the maximum random backoff time that is the upper limit of the algorithm of generating a random backoff time to a smaller value compared with that in the idle mode, and select a chunk to be used for retransmission of RACH from available chunks such that the relationship between the number of available chunks and the maximum random backoff time is kept constant.

When response information addressed to the mobile station devices MS 1 to MS4 is received in DSCSCH (Sb 5), the mobile station devices MS1 to MS4 terminate FACH-random-access processing. When response information is NACK, the mobile station devices MS1 to MS4 may retry FACH random accesses.

Thus, similar effects to those of the first to third embodiments can be achieved not only in RACH random accesses, but also in random accesses of a normal uplink CBCH, such as FACH or URCH.

In the first to fourth embodiments, the transmitter 100, the receiver 110, the radio controller 120 which are shown in FIG. 4, and the transmitter 200 and the receiver 210 which are shown in FIG 9 may be implemented by a dedicated hardware. Additionally, each unit may include memory and CPU (Central Processing Unit). Further, functions of each unit may be implemented by programs for implementing the functions of each unit being loaded onto the memory and executed.

Although the details of the embodiments of the present invention have been explained with reference to the accompanying drawings, the specific configuration is not limited thereto, and various modifications can be made without departing from the scope of the present invention.

### INDUSTRIAL APPLICABILITY

The present invention is preferably used for a multi-band wireless communication system in which cellular phones of different communication bandwidths are included and perform random accesses to a base station device since communication standards are different, but is not limited thereto.

## Claims

1. A wireless communication system, comprising:
a base station device; and
a mobile station device that tries a random access to the base station device, wherein
the mobile station device determines an upper limit of a random backoff time representing an interval from when the random access fails to when another random access is retried based on a relationship between the mobile station device and the base station device.

2. A wireless communication system, comprising:
a base station device; and
a mobile station device that tries a random access to the base station device, wherein
the mobile station device sets a random backoff time representing an interval from when the random access fails to when another random access is retried to a value in a range between an upper limit and a lower limit which are determined based on a relationship between the mobile station device and the base station device, and selects a frequency band to be used for retrying the other random access from available frequency bands determined based on the relationship.

3. The wireless communication system according to claim 2, wherein a difference between the upper limit and the lower limit is determined based on a total bandwidth of the available frequency bands.

4. The wireless communication system according to any one of claims 1 to 3, wherein the relationship comprises a communication state between the mobile station device and the base station device.

5. The wireless communication system according to any one of claims 1 to 4, wherein the communication state comprises
a first communication state in which neither a physical layer nor a logical layer is connected, and
a second communication state in which only the logical layer is connected.

6. The wireless communication system according to claim 5, wherein the upper limit is smaller in the first communication state than that in the second communication state.

7. The wireless communication system according to any one of claims 1 to 3, wherein the relationship comprises a service type of communication between the mobile station device and the base station device.

8. The wireless communication system according to claim 7, wherein the upper limit is determined based on a quality of service required for the service type of communication.

9. The wireless communication system according to claim 8, wherein the upper limit is smaller when the quality of service is high than when the quality of service is low.

10. A mobile station device that tries a random access to a base station device, wherein the mobile station device determines an upper limit of a random backoff time representing an interval from when the random access fails to when another random access is retried based on a relationship between the mobile station device and the base station device.

11. A random access method for a wireless communication system comprising a base station device and a mobile station device that tries a random access to the base station device, the random access method comprising:
a first step of the mobile station device selecting a random backoff time smaller than a value determined based on a relationship between the mobile station device and the base station device when the random access fails; and
a second step of the mobile station device retrying another random access after the random backoff time has elapsed.

## Amended claims

### Amended claims under Art. 19.1 PCT

1. (Canceled)

2. (Canceled)

3. (Canceled)

4. (Canceled)

5. (Canceled)

6. (Canceled)

7. (Canceled)

8. (Canceled)

9. (Canceled)

10. (Canceled)

11. (Canceled)

12. (New) A wireless communication system, comprising:
a base station device; and
a mobile station device that tries a random access to the base station device, wherein
the mobile station device determines an upper limit of a random backoff time representing an interval from when the random access fails to when another random access is retried based on a connection state of a logical layer between the mobile station device and the base station device.

13. (New) The wireless communication system according to claim 12, wherein the connection state comprises a communication state in which the logical layer is not connected and a communication state in which the logical layer is connected.

14. (New) The wireless communication system according to claim 13, wherein a physical layer is not connected in the communication state in which the logical layer is connected.

15. (New) The wireless communication system according to claim 13 or 14, wherein the upper limit is smaller in the communication state in which the logical layer is connected than that in the communication state in which the logical layer is not connected.

16. (New) A wireless communication system, comprising:
a base station device; and
a mobile station device that tries a random access to the base station device, wherein
the mobile station device determines an upper limit of a random backoff time representing an interval from when the random access fails to when another random access is retried based on a service type of communication between the mobile station device and the base station device.

17. (New) The wireless communication system according to claim 16, wherein the upper limit is determined based on a quality of service required for the service type of communication.

18. (New) The wireless communication system according to claim 17, wherein the upper limit is smaller when the quality of service is high than when the quality of service is low.

19. (New) A wireless communication system, comprising:
a base station device; and
a mobile station device that tries a random access to the base station device, wherein
the mobile station device sets a random backoff time representing an interval from when the random access fails to when another random access is retried to a value in a range between an upper limit and a lower limit determined based on a relationship between the mobile station device and the base station device, and selects a frequency band to be used for retrying the other random access from available frequency bands determined based on the relationship, and
a difference between the upper limit and the lower limit is determined based on a total bandwidth of the available frequency bands.

20. (New) The wireless communication system according to claim 19, wherein the relationship comprises a connection state of a logical layer between the mobile station device and the base station device.

21. (New) The wireless communication system according to claim 20, wherein the connection state comprises a communication state in which the logical layer is not connected and a communication state in which the logical layer is connected.

22. (New) The wireless communication system according to claim 21, wherein a physical layer is not connected in the communication state in which the logical layer is connected.

23. (New) The wireless communication system according to claim 21 or 22, wherein the upper limit is smaller in the communication state in which the logical layer is connected than that in the communication state in which the logical layer is not connected.

24. (New) The wireless communication system according to claim 19, wherein the relationship comprises a service type of communication between the mobile station device and the base station device.

25. (New) The wireless communication system according to claim 24, wherein the upper limit is determined based on a quality of service required for the service type of communication.

26. (New) The wireless communication system according to claim 25, wherein the upper limit is smaller when the quality of service is high than when the quality of service is low.

27. (New) A mobile station device that tries a random access to a base station device, wherein the mobile station device determines an upper limit of a random backoff time representing an interval from when the random access fails to when another random access is retried based on a connection state of a logical layer between the mobile station device and the base station device.

28. (New) A mobile station device that tries a random access to a base station device, wherein the mobile station device determines an upper limit of a random backoff time representing an interval from when the random access fails to when another random access is retried based on a service type of communication between the mobile station device and the base station device.

29. (New) A mobile station device that tries a random access to the base station device, wherein
the mobile station device sets a random backoff time representing an interval from when the random access fails to when another random access is retried to a value in a range between an upper limit and a lower limit which are determined based on a relationship between the mobile station device and the base station device, and selects a frequency band to be used for retrying the other random access from available frequency bands determined based on the relationship, and
a difference between the upper limit and the lower limit is determined based on a total bandwidth of the available frequency bands.

30. (New) A random access method for a wireless communication system comprising a base station device and a mobile station device that tries a random access to the base station device, the random access method comprising:
a first step of the mobile station device determining an upper limit of a random backoff time representing an interval from when the random access fails to when another random access is retried based on a connection state of a logical layer between the mobile station device and the base station device; and
a second step of the mobile station device retrying the other random access after the random backoff time has elapsed.

31. (New) A random access method for a wireless communication system comprising a base station device and a mobile station device that tries a random access to the base station device, the random access method comprising:
a first step of the mobile station device determining an upper limit of a random backoff time representing an interval from when the random access fails to when another random access is retried based on a service type of communication between the mobile station device and the base station device; and
a second step of the mobile station device retrying the other random access after the random backoff time has elapsed.

32. (New) A random access method for a wireless communication system comprising a base station device and a mobile station device that tries a random access to the base station device, the random access method comprising:
a first step of the mobile station device determining an upper limit of a random backoff time representing an interval from when the random access fails to when another random access is retried based on a relationship between the mobile station device and the base station device, a difference between the upper limit and the lower limit being determined based on a total bandwidth of available frequency bands determined based on the relationship, and selecting a frequency band to be used for retrying the other random access from the available frequency bands; and
a second step of the mobile station device retrying the other random access after the random backoff time has elapsed.

Statement under Art. 19.1 PCT
New claim 12 corresponds to claim 1 amended to include the features of claim 4 and replace "a communication state" with "a connection state of a logical layer". Support for the amendments can be found in claim 5.

Support for new claim 13 can be found in the paragraph [0115].

Support for new claim 14 can be found in the paragraph [0115].

New claim 15 corresponds to claim 6 amended to depend from claim 13 or 14.

New claim 16 corresponds to claim 1 amended to include the features of claim 7.

New claim 17 corresponds to claim 8 amended to depend from claim 16.

New claim 18 corresponds to claim 9 amended to depend from claim 17.

New claim 19 corresponds to claim 2 amended to include the features of claim 3.

New claim 20 corresponds to claim 4 amended to depend from claim 19 and replace "a communication state" with "a connection state of a logical layer". Support for the amendments can be found in claim 5.

Support for new claim 21 can be found in the paragraph [0115].

Support for new claim 22 can be found in the paragraph [0115].

New claim 23 corresponds to claim 6 amended to depend from claim 21 or 22.

New claim 24 corresponds to claim 7 amended to depend from claim 23.

New claim 25 corresponds to claim 8 amended to depend from claim 24.

New claim 26 corresponds to claim 9 amended to depend from claim 25.

New claim 27 is directed to the invention of a mobile station device corresponding to claim 12.

New claim 28 is directed to the invention of a mobile station device corresponding to claim 16.

New claim 29 is directed to a mobile station device corresponding to claim 19.

New claim 30 is directed to a random access method corresponding to claim 12.

New claim 31 is directed to a random access method corresponding to claim 16.

New claim 32 is directed to a random access method corresponding to claim 19.

In accordance with the amendments of claims 12 to 32, claims 1 to 11 have been canceled.
